(19) Europäisches Patentamt
European Patent Office
Office européen des brevets

(11) **EP 4 183 895 A1**

(12) **EUROPEAN PATENT APPLICATION**
published in accordance with Art. 153(4) EPC

(43) Date of publication:
**24.05.2023 Bulletin 2023/21**

(21) Application number: **21840432.5**

(22) Date of filing: **02.06.2021**

(51) International Patent Classification (IPC):
**C25B 1/02** *(2006.01)*    **C01B 3/00** *(2006.01)*
**C25B 15/02** *(2021.01)*

(52) Cooperative Patent Classification (CPC):
**C01B 3/00; C25B 1/02; C25B 15/02;** Y02E 60/32

(86) International application number:
**PCT/JP2021/021044**

(87) International publication number:
**WO 2022/014185 (20.01.2022 Gazette 2022/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.07.2020    JP 2020120775
21.04.2021    JP 2021071647
20.05.2021    JP 2021085496**

(71) Applicant: **PANASONIC INTELLECTUAL
PROPERTY
MANAGEMENT CO., LTD.
Chuo-ku
Osaka-shi
Osaka 540-6207 (JP)**

(72) Inventors:
• **NAKAUE, Takayuki**
  **Osaka-shi, Osaka 540-6207 (JP)**
• **ONUMA, Shigenori**
  **Osaka-shi, Osaka 540-6207 (JP)**
• **KANI, Yukimune**
  **Osaka-shi, Osaka 540-6207 (JP)**

(74) Representative: **Grünecker Patent- und
Rechtsanwälte
PartG mbB
Leopoldstraße 4
80802 München (DE)**

(54) **HYDROGEN SYSTEM AND METHOD OF OPERATING HYDROGEN SYSTEM**

(57)     A hydrogen system includes: a compressor including at least one cell that includes an electrolyte membrane, an anode catalyst layer provided on one principal surface of the electrolyte membrane, a cathode catalyst layer provided on another principal surface of the electrolyte membrane, an anode gas diffusion layer provided on the anode catalyst layer and including a porous sheet containing a metal, and a cathode gas diffusion layer provided on the cathode catalyst layer, and a voltage applicator that apples a voltage between the anode catalyst layer and the cathode catalyst layer, wherein the compressor that generates compressed hydrogen by causing the voltage applicator to apply the voltage to move hydrogen in hydrogen-containing gas supplied to an anode to the cathode via the electrolyte membrane; and a controller that causes the voltage applicator to apply the voltage after shutdown or at startup.

FIG. 1

EP 4 183 895 A1

**Description**

Technical Field

The present disclosure relates to a hydrogen system and a method of operating a hydrogen system.

Background Art

In recent years, in light of the environmental issues such as global warming and energy issues such as depletion of petroleum resources, hydrogen has been attracting attention as a clean alternative energy source that replaces a fossil fuel. When hydrogen burns, it basically produces only water and discharges no carbon dioxide that causes global warming and almost no nitrogen oxides and the like. Thus, hydrogen is promising as clean energy. For example, fuel cells are devices that utilize hydrogen highly efficiently as a fuel and have been developed and have spread to automobile power supplies and private power generation for home use.

For the upcoming hydrogen society, technological development is desired not only for producing hydrogen but also for enabling hydrogen to be stored at high density and to be transported and used in a small capacity and at low cost. In particular, to promote the spread of fuel cells that serve as distributed energy sources, it is necessary to prepare a hydrogen supply infrastructure. Hence, to supply hydrogen stably, various studies are being conducted on the production, purification, and high-density storage of high-purity hydrogen.

PTL 1 and PTL 2 propose, as an example of an apparatus for producing and compressing hydrogen, a water electrolysis apparatus in which a layered body of an electrolyte membrane, an anode, a cathode, and a separator is sandwiched by end plates. Note that the layered body of the anode, the electrolyte membrane, and the cathode is referred to as a membrane electrode assembly (hereinafter referred to as MEA). In addition, for example, PTL 3 proposes an electrochemical hydrogen pump including MEA.

Here, in PTL 1, a method for suppressing corrosion of a cathode separator is studied. In PTL 2, improvement of energy efficiency of a system by maintaining a porosity of a titanium powder sintered body in a predetermined range is studied.

Citation List

Patent Literature

PTL 1: Japanese Patent No. 5095670
PTL 2: Japanese Patent No. 4165655
PTL 3: Japanese Unexamined Patent Application Publication No. 2019-206749

Summary of Invention

Technical Problem

By way of example, an object of the present disclosure is to provide a hydrogen system and a method of operating a hydrogen system that may suppress deterioration of an electrolyte membrane as compared to the related art.

Solution to Problem

A hydrogen system according to an aspect of the present disclosure includes: A hydrogen system includes: a compressor including at least one cell that includes an electrolyte membrane, an anode catalyst layer provided on one principal surface of the electrolyte membrane, a cathode catalyst layer provided on another principal surface of the electrolyte membrane, an anode gas diffusion layer provided on the anode catalyst layer and including a porous sheet containing a metal, and a cathode gas diffusion layer provided on the cathode catalyst layer, and a voltage applicator that apples a voltage between the anode catalyst layer and the cathode catalyst layer, wherein the compressor that generates compressed hydrogen by causing the voltage applicator to apply the voltage to move hydrogen in hydrogen-containing gas supplied to an anode to the cathode via the electrolyte membrane; and a controller that causes the voltage applicator to apply the voltage after shutdown or at startup.

A method of operating a hydrogen system according to another aspect of the present disclosure includes: moving, to a cathode, hydrogen in a hydrogen-containing gas supplied to an anode to produce compressed hydrogen, by applying a voltage between the anode, which includes an anode gas diffusion layer including a porous sheet containing a metal, and the cathode, the anode and the cathode being provided with an electrolyte membrane interposed therebetween; and applying a voltage between the anode and the cathode after shutdown or at startup.

Advantageous Effects of Invention

A hydrogen system and a method of operating a hydrogen system according to an aspect of the present disclosure can achieve the effect that deterioration of an electrolyte membrane may be suppressed as compared to the related art.

Brief Description of Drawings

[Fig. 1] Fig. 1 is a potential-pH diagram of titanium (Ti).
[Fig. 2] Fig. 2 is a diagram illustrating an example of a hydrogen system of a first embodiment.
[Fig. 3A] Fig. 3A is a diagram illustrating an example of an electrochemical hydrogen pump of the hydrogen system of the first embodiment.
[Fig. 3B] Fig. 3B is an enlarged diagram of part B of the electrochemical hydrogen pump of Fig. 3A.
[Fig. 4A] Fig. 4A is a diagram illustrating an example of the electrochemical hydrogen pump of the hydrogen system of the first embodiment.
[Fig. 4B] Fig. 4B is an enlarged diagram of part B of the electrochemical hydrogen pump of Fig. 4A.
[Fig. 5] Fig. 5 is a pH-potential diagram of titanium (Ti) created based on a verification experiment.
[Fig. 6] Fig. 6 is a flowchart illustrating an example of an operation of the hydrogen system of the first embodiment.
[Fig. 7A] Fig. 7A is a flowchart illustrating an example of an operation of a hydrogen system of a first example of the first embodiment.
[Fig. 7B] Fig. 7B is a flowchart illustrating an example of an operation of a hydrogen system of a second example of the first embodiment.
[Fig. 8] Fig. 8 is a diagram illustrating an example of a hydrogen system of a second embodiment.
[Fig. 9] Fig. 9 is a diagram illustrating an example of a hydrogen system of a third embodiment.
[Fig. 10] Fig. 10 is a flowchart illustrating an example of an operation of the hydrogen system of the third embodiment.
[Fig. 11] Fig. 11 is a flowchart illustrating an example of an operation of a hydrogen system of a first example of a fourth embodiment.
[Fig. 12] Fig. 12 is a flowchart illustrating an example of an operation of a hydrogen system of a second example of the fourth embodiment.
[Fig. 13] Fig. 13 is a flowchart illustrating an example of an operation of a hydrogen system of a third example of the fourth embodiment.
[Fig. 14] Fig. 14 is a flowchart illustrating an example of an operation of a hydrogen system of a first example of a fifth embodiment.
[Fig. 15] Fig. 15 is a flowchart illustrating an example of an operation of a hydrogen system of a second example of the fifth embodiment.

Description of Embodiments

Generally, a highly acidic sulfonic acid group is present in an electrolyte membrane. Thus, PTL 2 proposes titanium as an example of an electrode material to which a positive potential is given. One reason for this is that a fine thin film of $TiO_2$ is formed on titanium when a titanium potential is positive. This provides an anode with high corrosion resistance.

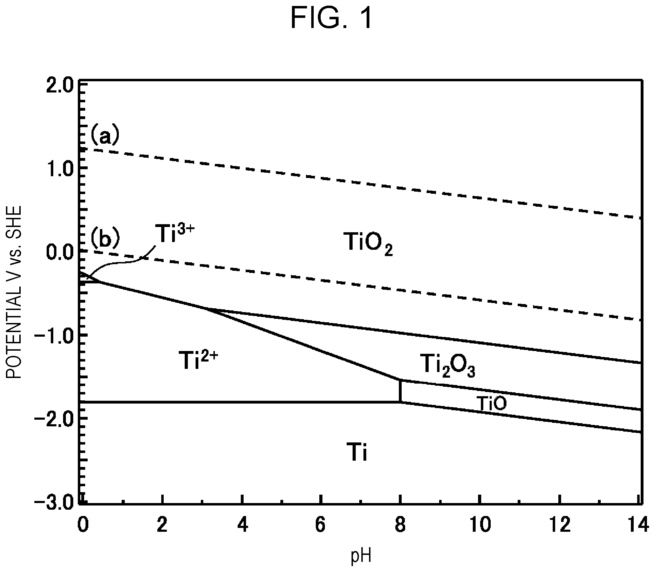

According to a "potential-pH diagram" illustrated in Fig. 1, however, it has been known that $Ti^{3+}$ or $Ti^{2+}$, which is an ionic state of titanium, is stable when pH is around zero and the titanium potential is a negative potential such as approximately minus 0.4 V (-0.4 V). As a result, titanium easily elutes in water.

Here, in an electrochemical compressor, in a case where no voltage is applied between an anode and a cathode, an anode potential may become negative due to a hydrogen partial pressure of each of the anode and the cathode of the compressor. For example, after a gas present in the cathode is externally released and a cathode pressure drops to the same level as outside air pressure, an amount of outside air entering the cathode may be greater than the amount of the outside air entering the anode. As a result, the anode potential may become negative as the hydrogen partial pressure of the anode is higher than the hydrogen partial pressure of the cathode. Then, if an anode gas diffusion layer includes titanium powder as in PTL 2, due to elution of titanium in water, titanium ions may modify the sulfonic acid group in the electrolyte membrane. As a result, proton electrical conductivity of the electrolyte membrane may be irreversibly reduced.

In addition, even when a noble metal coating, which does not easily elute in water in an acidic state, is formed on a titanium surface by using plating or CVD coating or the like, it is believed that perfect coating of the titanium surface by the noble metal is difficult. Then, if a pin hall is present in the coating, the elution of titanium in water occurs via the pin hall, and ion-exchange may occur between the titanium ions and the sulfonic acid group in the electrolyte membrane. Thus, deterioration of the electrolyte membrane may progress.

Note that the above-mentioned phenomena may be similarly observed even in a case where the anode gas diffusion layer includes an electrode material containing any metal other than titanium. Specific examples of such electrode materials are described in the embodiments.

Hence, as a result of diligent studies in light of such circumstances, the present disclosers found that the above-described problems may be improved by the use of voltage control between an anode and a cathode, and achieved the following one aspect of the present disclosure.

Specifically, a first aspect of the present disclosure is a hydrogen system including A hydrogen system includes: a compressor including at least one cell that includes an electrolyte membrane, an anode catalyst layer provided on one principal surface of the electrolyte membrane, a cathode catalyst layer provided on another principal surface of the electrolyte membrane, an anode gas diffusion layer provided on the anode catalyst layer and including a porous sheet containing a metal, and a cathode gas diffusion layer provided on the cathode catalyst layer, and a voltage applicator that apples a voltage between the anode catalyst layer and the cathode catalyst layer, wherein the compressor that generates compressed hydrogen by causing the voltage applicator to apply the voltage to move hydrogen in hydrogen-containing gas supplied to an anode to the cathode via the electrolyte membrane; and a controller that causes the voltage applicator to apply the voltage after shutdown or at startup.

According to such a configuration, the hydrogen system of this aspect may suppress the deterioration of the electrolyte membrane as compared to the related art. Specifically, in the hydrogen system of this aspect, by causing the voltage applicator to apply a voltage between the anode catalyst layer and the cathode catalyst layer at appropriate time after shutdown or at startup, the anode potential of the compressor is less likely to become negative as compared to a case where such voltage control is not performed. Then, the hydrogen system of this aspect can suppress the elution in water of the metal contained in the porous sheet. As such, since the hydrogen system of this aspect can reduce a possibility that metal ions modify the sulfonic acid group in the electrolyte membrane, the deterioration of the electrolyte membrane is suppressed as compared to the related art.

After the shutdown or at the startup, the hydrogen partial pressure of the anode may be higher than the hydrogen partial pressure of the cathode. For example, after the shutdown, if the amount of outside air entering the cathode from outside is greater than the amount of the outside air entering the anode from the outside, the hydrogen partial pressure of the anode may be higher than the hydrogen partial pressure of the cathode. Then, due to the elution of the metal ions contained in the anode gas diffusion layer, ion-exchange may occur between the metal ions and protons of the sulfonic acid group in the electrolyte membrane. As a result, the electrolyte membrane may deteriorate.

Hence, in the hydrogen system of this aspect, by causing the voltage applicator to apply the above-mentioned voltage after the shutdown or at the startup, the elution of the metal ions is suppressed, as compared to the case where such voltage control is not performed. As such, ion-exchange is inhibited from occurring between the metal ions and the protons of the sulfonic acid group in the electrolyte membrane. Consequently, the electrolyte membrane is less likely to deteriorate.

In the hydrogen system according to the first aspect, a second aspect of the present disclosure may be the hydrogen system in which the controller causes the voltage applicator to apply the voltage after supply of the hydrogen-containing gas to the anode is stopped.

In the hydrogen system of this aspect, after shutdown, by causing the voltage applicator to apply the above-mentioned voltage after the supply of the hydrogen-containing gas to the anode is stopped, the elution of the metal ions is suppressed as compared to the case where voltage control is not performed. As a result, ion-exchange is inhibited from occurring between the metal ions and the protons of the sulfonic acid group in the electrolyte membrane. Consequently, the electrolyte membrane is less likely to deteriorate.

In the hydrogen system according to the first aspect, a third aspect of the present disclosure may be the hydrogen system in which the controller causes the voltage applicator to apply the voltage after a cathode off gas is discharged from the cathode to a discharge destination different from a hydrogen demanding unit.

After the shutdown, the hydrogen partial pressure of the anode may be higher than the hydrogen partial pressure of the cathode after the cathode off gas is discharged from the cathode to the discharge destination different from the hydrogen demanding unit. For example, if the amount of outside air that mixes into the cathode from the outside is greater than the outside air mixing into the anode from the outside after the cathode off gas is discharged to the different destination from the hydrogen demanding unit, the hydrogen partial pressure of the anode may be higher than the hydrogen partial pressure of the cathode. Then, due to the elution of the metal ions contained in the anode gas diffusion layer, ion-exchange may occur between the metal ions and the protons of the sulfonic acid group in the electrolyte membrane. As a result, the electrolyte membrane may deteriorate.

Hence, in the hydrogen system of this aspect, after the shutdown, by causing the voltage applicator to apply the above-mentioned voltage after discharging the cathode off gas from the cathode to the destination different from the hydrogen demanding unit, the elution of the metal ions is suppressed as compared to the case where such voltage control is not performed. As a result, ion-exchange is inhibited from occurring between the metal ions and the protons of the sulfonic acid group in the electrolyte membrane. Consequently, the electrolyte membrane is less likely to deteriorate.

In the hydrogen system according to any one of the first to third aspects, a fourth aspect of the present disclosure may be the hydrogen system in which the metal includes titanium.

According to such a configuration, in the hydrogen system of this aspect, by making the porous sheet from titanium, the fine thin film of $TiO_z$ is formed on titanium when the titanium potential is positive. This enables the hydrogen system of this aspect to obtain the anode gas diffusion layer having a high corrosion resistance in an acidic environment.

In the hydrogen system according to any one of the first to fourth aspects, a fifth aspect of the present disclosure may be the hydrogen system in which after the shutdown, the controller causes the voltage applicator to apply the voltage smaller than a maximum voltage to be applied during operation.

According to such a configuration, after the shutdown, by selecting, as the voltage applied between the anode catalyst layer and the cathode catalyst layer to suppress the deterioration of the electrolyte membrane, the voltage smaller than a maximum voltage applied thereto (hereinafter referred to as the maximum voltage) during operation, the hydrogen system of this aspect can reduce power consumed by the voltage applicator as compared to a case where the maximum voltage is applied between the anode catalyst layer and the cathode catalyst layer, after the shutdown.

In the hydrogen system according to any one of the first to third aspects, a sixth aspect of the present disclosure may be the hydrogen system in which after the shutdown, the controller causes the voltage applicator to apply the voltage smaller than the voltage applied when a cathode pressure reaches a supply pressure of compressed hydrogen to a hydrogen demanding unit.

According to such a configuration, after the shutdown, by selecting, as the voltage applied between the anode catalyst layer and the cathode catalyst layer to suppress the deterioration of the electrolyte membrane, the voltage smaller than the voltage applied when the cathode pressure reaches the supply pressure of the compressed hydrogen to the hydrogen demanding unit after the shutdown, the hydrogen system of this aspect can reduce the power consumed by the voltage applicator as compared to a case where such applied voltage is applied between the anode catalyst layer and the cathode catalyst layer after the shutdown.

In the electrochemical compressor, hydrogen moves from the anode to the cathode via the electrolyte membrane when the voltage for suppressing deterioration of the electrolyte membrane is applied between the anode catalyst layer and the cathode catalyst layer, after the shutdown. Then, with the amount of hydrogen present in the anode decreasing, a pressure inside the anode is reduced. Thus, the anode may become a negative pressure. Then, if air enters the anode from the outside due to the negative pressure of the anode, the cell of the compressor may deteriorate.

Thus, in the hydrogen system according to any one of the first to sixth aspects, a seventh aspect of the present disclosure may be the hydrogen system further including: a flow regulator that regulates a flow rate of the hydrogen-containing gas supplied to the anode, in which when the controller causes the voltage applicator to apply the voltage after the shutdown, the controller controls the flow regulator such that the hydrogen-containing gas is supplied to the anode at a flow rate smaller than a flow rate of the hydrogen-containing gas supplied to the anode during the operation.

According to such a configuration, the hydrogen system of this aspect can charge the hydrogen-containing gas to the anode using the flow rate regulator, even if hydrogen moves from the anode to the cathode via the electrolyte membrane when the voltage is applied between the anode catalyst layer and cathode catalyst layer to suppress the deterioration of the electrolyte membrane, after the shutdown. Then, the possibility that the anode becomes the negative pressure after the shutdown is reduced.

In addition, since no compressed hydrogen produced at the cathode is supplied from the cathode of the compressor to the hydrogen demanding unit after the shutdown, the hydrogen system of this aspect can make the flow rate of the hydrogen-containing gas charged to the anode smaller than the flow rate of the hydrogen-containing gas supplied to the anode during operation.

In the hydrogen system according to any one of the first to sixth aspects, an eighth aspect of the present disclosure may be the hydrogen system further including: a flow regulator that regulates a flow rate of the hydrogen-containing gas supplied to the anode, in which when the controller causes the voltage applicator to apply the voltage after the shutdown, the controller controls the flow regulator and does not supply the hydrogen-containing gas to the anode.

According to such a configuration, the hydrogen system of this aspect can reduce the amount of consumption of the hydrogen-containing gas from a supply source of the hydrogen-containing gas, as compared to the hydrogen system of the seventh aspect. A hydrogen tank, hydrogen infrastructure, a water electrolysis apparatus or the like are exemplified as supply sources of the hydrogen-containing gas.

In the electrochemical compressor, after the shutdown, hydrogen moves from the cathode to the anode via the electrolyte membrane due to a differential pressure between the cathode and the anode. Thus, there is a possibility that a pressure of the compressed hydrogen present in the cathode of the compressor is not maintained at a desired value.

Thus, in the hydrogen system according to any one of the first to eighth aspects, a ninth aspect of the present disclosure may be the hydrogen system in which after the shutdown, the controller causes the voltage applicator to apply the voltage necessary for moving, from the anode to the cathode, hydrogen of an amount which corresponds to an amount of hydrogen returning from the cathode to the anode via the electrolyte membrane.

According to such a configuration, the hydrogen system of this aspect can maintain the pressure of the compressed hydrogen present in the compressor at a desired value, by setting the voltage applied between the anode catalyst layer and the cathode catalyst layer to suppress the deterioration of the electrolyte membrane after the shutdown as described above, in consideration of the amount of hydrogen that moves from the cathode to the anode via the electrolyte membrane due to the differential pressure between the cathode and the anode.

In the hydrogen system according to any one of the first to ninth aspects, a tenth aspect of the present disclosure may be the hydrogen system further including: a first flow channel for supplying to the anode a cathode off gas discharged from the cathode of the compressor, a first on-off valve provided in the first flow channel, a second flow channel through which an anode off gas discharged from the anode of the compressor flows, and a second on-off valve provided in the second flow channel, in which before or while the controller causes the voltage applicator to apply the voltage after the shutdown, the controller opens the first on-off valve and closes the second on-off valve.

According to such a configuration, the hydrogen system of this aspect can mix the cathode off gas present in the cathode of the compressor with the anode gas present in the anode of the compressor via the first flow channel by opening the first on-off valve, after the shutdown. Then, after the system is stopped and the gas present in the cathode is released, even if the amount of outside air entering the cathode is greater than the amount of air entering the anode, the difference between the hydrogen partial pressure of the anode and the hydrogen partial pressure of the cathode is reduced.

Then, in the hydrogen system of this aspect, since not only the first on-off valve is opened and the second on-off valve is closed, but also the voltage is applied between the anode catalyst layer and the cathode catalyst layer by the voltage applicator, the gas present in each of the anode and the cathode of the compressor cycles in the compressor and the first flow channel. Thus, the difference between the respective hydrogen partial pressures of the anode and the cathode is further made smaller.

With the above, in the hydrogen system of this aspect, the anode potential is less likely to become negative. Thus, the deterioration of the electrolyte membrane is suppressed. In addition, in the hydrogen system of this aspect, a dryness-wetness difference between a principal surface area on the side of the anode and a principal surface area on the side of the cathode in the electrolyte membrane promptly decreases, which thus suppresses mechanical deterioration of the electrolyte membrane.

In the hydrogen system according to any one of the first to tenth aspects, an eleventh aspect of the present disclosure may be the hydrogen system in which after the shutdown, the controller causes the voltage applicator to apply the voltage smaller than or equal to 1/10 of the maximum voltage to be applied during operation.

According to such a configuration, by selecting the voltage smaller than or equal to 1/10 of the maximum voltage as the voltage applied between the anode catalyst layer and the cathode catalyst layer to suppress the deterioration of the electrolyte membrane, after the shutdown, the hydrogen system of this aspect can reduce the power consumed by the voltage applicator as compared to a case where the voltage exceeding 1/10 of the maximum voltage is applied therebetween after the shutdown.

In the hydrogen system according to any one of the first to tenth aspects, a twelfth aspect of the present disclosure may be the hydrogen system in which after the shutdown, the controller causes the voltage applicator to apply the voltage lower than or equal to 0.1 V per the one cell.

According to such a configuration, by selecting the voltage of 0.1 V or lower per cell as the voltage applied between the anode catalyst layer and the cathode catalyst layer to suppress the deterioration of the electrolyte membrane after the shutdown, the hydrogen system of this aspect can reduce the power consumed by the voltage applicator as compared to a case where the voltage exceeding 0.1 V per cell is applied therebetween after the shutdown.

In the hydrogen system according to any one of the first to twelfth aspects, a thirteenth aspect of the present disclosure may be the hydrogen system in which the voltage applied by the voltage applicator after the shutdown is the voltage necessary for increasing to 0 V or higher an anode potential of the compressor that is assumed when no voltage is applied by the voltage applicator after the shutdown.

According to such a configuration, by selecting, as the voltage applied between the anode catalyst layer and the cathode catalyst layer to suppress the deterioration of the electrolyte membrane after the shutdown, the voltage necessary for increasing to 0 V or higher the anode potential of the compressor that is assumed when no voltage is applied therebetween by the voltage applicator after the shutdown, the anode potential is less likely to become negative as compared to a case where the voltage lower than such a necessary voltage is applied therebetween after the shutdown. Therefore, the hydrogen system of this aspect can suppress the elution in water of the metal contained in the porous sheet. That is, the deterioration of the electrolyte membrane can be further suppressed.

Here, if the voltage is applied between the anode and the cathode when the hydrogen system is started, the anode potential is unlikely to be at or lower than an elution potential of the titanium ions such as $Ti^{3+}$ or $Ti^{2+}$. However, it has not been fully studied in examples according to the related art what timing is desirable to apply the voltage between the anode and the cathode.

Specifically, Fig. 1 merely illustrates a calculation result of a general "pH-potential diagram of titanium" in water at 25°C on the assumption that activity of $Ti^{3+}$ is $1 \times 10^{-6}$ mol/L. Therefore, based on the calculation result of the general "pH-potential diagram of titanium" illustrated in Fig. 1, the present disclosers thought that it was difficult to apply the voltage between the anode and the cathode at appropriate timing when the hydrogen system was started. Note that it is described in verification examples of the embodiments how the present disclosers reached such a determination.

Specifically, in the hydrogen system according to the first aspect, a fourteenth aspect of the present disclosure may be the hydrogen system in which the controller causes the voltage applicator to apply the voltage when no hydrogen-containing gas is supplied to the anode at the startup.

According to such a configuration, the hydrogen system of this aspect may suppress the deterioration of the electrolyte membrane as compared to the related art. Specifically, even if no hydrogen-containing gas is supplied to the anode when the hydrogen system is started, the hydrogen partial pressure of the anode may be higher than the hydrogen partial pressure of the cathode. For example, if the amount of outside air mixing into the cathode from the outside is greater than the amount of outside air mixing into the anode from the outside after the hydrogen system is stopped, the hydrogen partial pressure of the anode may be higher than the hydrogen partial pressure of the cathode. Then, due to elution of the metal ions contained in the anode gas diffusion layer, ion-exchange may occur between the metal ions and the protons of the sulfonic acid group in the electrolyte membrane. As a result, the electrolyte membrane may deteriorate.

Hence, in the hydrogen system of this aspect, by causing the voltage applicator to apply the above-mentioned voltage when no hydrogen-containing gas is supplied to the anode at the startup, elution of the metal ions is suppressed as compared to a case where such voltage control is not performed. As a result, ion-exchange is inhibited from occurring between the metal ions and the protons of the sulfonic acid group in the electrolyte membrane. Consequently, the electrolyte membrane is less likely to deteriorate.

In the hydrogen system according to the first aspect, a fifteenth aspect of the present disclosure may be the hydrogen system in which when the hydrogen-containing gas is supplied to the anode at the startup, the controller causes the voltage applicator to apply the voltage when a potential of the anode is greater than a predetermined potential at which metal ions contained in the anode gas diffusion layer elute, or the controller causes the voltage applicator to apply the voltage within a predetermined period of time after the potential of the anode falls below the predetermined potential.

According to such a configuration, the hydrogen system of this aspect may suppress the deterioration of the electrolyte membrane as compared to the related art. Specifically, when the amount of outside air mixing to the cathode from the outside increases after the hydrogen system is stopped, the hydrogen partial pressure of the anode may be higher than the hydrogen partial pressure of the cathode as time lapses, if the hydrogen-containing gas is supplied to the anode at the startup. Thus, by causing the voltage applicator to apply the above-mentioned voltage when the potential of the anode is greater than the potential at or below which the metal ions elute, in other words, before the potential of the anode falls below the potential at which the metal ions elute, the potential of the anode is inhibited from falling below the potential at which the metal ions elute, as compared to a case where such voltage control is not performed. Consequently, the electrolyte membrane is less likely to deteriorate.

In addition, when the hydrogen-containing gas is supplied to the anode at the startup, by causing the voltage applicator to apply the above-mentioned voltage within a predetermined period of time after the potential of the anode falls below the potential at which the metal ions elute, the hydrogen system of this aspect can reduce a period of time during which the potential of the anode is at or below the potential at which the metal ions elute as compared to the case where such voltage control is not performed. Consequently, progress of the deterioration of the electrolyte membrane is appropriately suppressed.

In the hydrogen system according to any one of the first, fourteenth, and fifteenth aspects, a sixteenth aspect of the present disclosure may be the hydrogen system in which the metal includes titanium.

According to such a configuration, in the hydrogen system of this aspect, by making the porous sheet from titanium, the fine thin film of TiOz is formed on titanium when the titanium potential is positive. This enables the hydrogen system of this aspect to obtain the anode gas diffusion layer having the high corrosion resistance in the acidic environment.

In the hydrogen system according to any one of the first and fourteenth to sixteenth aspects, a seventeenth aspect of the present disclosure may be the hydrogen system in which the cathode is filled with nitrogen or air before the voltage is applied by the voltage applicator.

If the cathode is filled with nitrogen or air, the hydrogen partial pressure of the anode may be higher than the hydrogen partial pressure of the cathode. Then, due to the elution of the metal ions contained in the anode gas diffusion layer, ion-exchange may occur between the metal ions and the protons of the sulfonic acid group in the electrolyte membrane. As a result, the electrolyte membrane may deteriorate.

Then, when the cathode is filled with nitrogen or air at the startup, the hydrogen system of this aspect causes the voltage applicator to apply the above-mentioned voltage. Then, the elution of the metal ions is suppressed, as compared to the case where such voltage control is not performed. As a result, ion-exchange is inhibited from occurring between the metal ions and the protons of the sulfonic acid group in the electrolyte membrane. Consequently, the electrolyte membrane is less likely to deteriorate.

In the hydrogen system according to the fifteenth aspect, an eighteenth aspect of the present disclosure may be the hydrogen system in which when a humidified hydrogen-containing gas is supplied to the anode at the startup, the controller controls the voltage applicator such that a density of current flowing through the cell is maintained at or below a first threshold which is smaller than an intended current density during a compressing operation, and such that a pressure of the cathode is maintained at or below a second threshold which is smaller than an intended pressure during the compressing operation.

In a case where the electrolyte membrane is dry when the hydrogen system is started, temperature of the electrolyte membrane may rise and the electrolyte membrane may deteriorate at a part where the electrolyte membrane is locally dried if a water content ratio of the electrolyte membrane is not increased to a proper value and the density of the current flowing through the cell exceeds the first threshold.

In addition, in a case where the electrolyte membrane is dry when the hydrogen system is started, a membrane rupture of the electrolyte membrane may occur if the water content ratio of the electrolyte membrane is not increased to the proper value and the pressure of the cathode exceeds the second threshold.

Hence, the hydrogen system of this aspect can reduce the above-described possibilities by increasing the water content ratio of the electrolyte membrane to the proper value by water in the hydrogen-contained gas, while performing an operation to maintain the density of the current flowing the cell and the pressure of the cathode, at or below the first threshold and the second threshold, respectively.

In the hydrogen system according to the eighteenth aspect, a nineteenth aspect of the present disclosure may be the hydrogen system in which when the voltage applied by the voltage applicator to maintain the density of the current flowing through the cell at or below the first threshold and the pressure of the cathode at or below the second threshold decreases, the controller increases the voltage applied by the voltage applicator such that at least one of the density of the current flowing through the cell or the pressure of the cathode increases.

It is possible to confirm an increase in the water content ratio of the electrolyte membrane by a decrease in the applied voltage of the voltage applicator, for example. Then, the hydrogen system of this aspect increases the applied voltage of the voltage applicator such that at least one of the density of the current flowing through the cell or the pressure of the cathode increases, if the voltage applied by the voltage applicator decreases in the operation to maintain the density of the current flowing through the cell and the pressure of the cathode at or below the first pressure and the at or below the second threshold, respectively. This enables the hydrogen system of this aspect to increase the at least one of the density of the current flowing through the cell or the pressure of the cathode at appropriate time as the water content ratio of the electrolyte membrane increases.

A twentieth aspect of the present disclosure is a method of operating a hydrogen system including: generating compressed hydrogen by applying a voltage between an anode and a cathode to move hydrogen in hydrogen-containing gas supplied to the anode to the cathode, which includes an anode gas diffusion layer including a porous sheet containing a metal, and the cathode, the anode and the cathode being provided with an electrolyte membrane interposed therebetween; and applying the voltage between the anode and the cathode after shutdown or at startup.

With the above, the method of operating a hydrogen system of this aspect may suppress the deterioration of the electrolyte membrane as compared to the related art. Note that a description of details of workings and effects of the hydrogen system of this aspect will be omitted because they are similar to the workings and effects of the hydrogen systems described above.

In the method of operating a hydrogen system according to the twentieth aspect, a twenty-first aspect of the present disclosure may be the method in which the voltage is applied between the anode and the cathode after supply of the hydrogen-containing gas to the anode is stopped.

The workings and effects of the method of operating a hydrogen system of this aspect are similar to the workings and effects of the hydrogen systems described above, and thus a description thereof will be omitted.

In the method of operating a hydrogen system according to the twentieth aspect, a twenty-second aspect of the present disclosure may be the method in which the voltage is applied between the anode and the cathode after a cathode off gas is discharged from the cathode to a discharge destination which is different from a hydrogen demanding unit.

The workings and effects of the method of operating a hydrogen system of this aspect are similar to the workings and effects of the hydrogen systems described above, and thus a description thereof will be omitted.

In the method of operating a hydrogen system according to the twentieth aspect, a twenty-third aspect of the present disclosure may be the method in which voltage is applied between the anode and the cathode when no hydrogen-containing gas is supplied to the anode at the startup.

The workings and effects of the method of operating a hydrogen system of this aspect are similar to the workings and effects of the hydrogen systems described above, and thus a description thereof will be omitted.

In the method of operating a hydrogen system according to the twentieth aspect, a twenty-fourth aspect of the present disclosure may be the method in which when the hydrogen-containing gas is supplied to the anode at the startup, the voltage is applied between the anode and the cathode when a potential of the anode is greater than a predetermined potential at which metal ions contained in the anode gas diffusion layer elute, or the voltage is applied between the anode and the cathode within a predetermined period of time after the potential of the anode falls below the predetermined potential.

The workings and effects of the method of operating a hydrogen system of this aspect are similar to the workings and effects of the hydrogen systems described above, and thus a description thereof will be omitted.

In the following, a description is given of the embodiments of the present disclosure, with reference to the accompanying drawings. Any of the embodiments to be described below represents an example of each of the aspects described above. Therefore, a numeric value, a shape, a material, and a component to be presented below as well as an arrangement position and a connection form of the component or the like are merely an example, and shall not limit each of the aspects described above unless they are described in the claims. In addition, of the components to be described below, those not described in an independent claim, which represents the highest-level concept, are described as an optional component. Further, a description of components with same symbols in the drawings may be omitted. For ease of understanding, the drawings schematically illustrate respective components and shapes and dimension ratios or the like may not be accurately indicated. In addition, for a method of operation, order of steps may be changed as necessary or a known step may be added.

(First Embodiment)

In an embodiment below, a description will be given of a configuration and an operation of a hydrogen system including an electrochemical hydrogen pump, which is an example of the compressor of each of the aspects described above.

[Configuration of Hydrogen System]

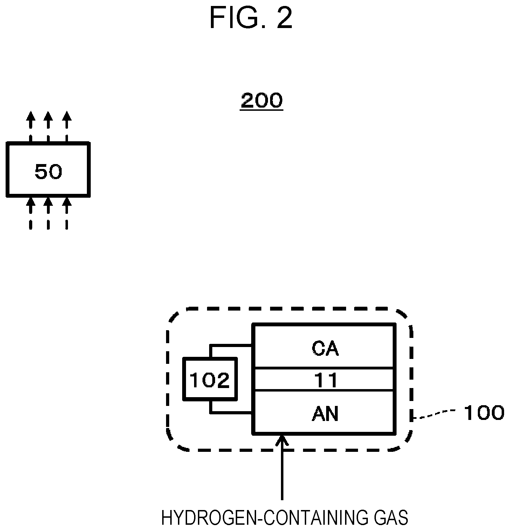

Fig. 2 is a diagram illustrating an example of the hydrogen system of the first embodiment.

In an example illustrated in Fig. 2, a hydrogen system 200 of the present embodiment includes an electrochemical hydrogen pump 100 and a controller 50.

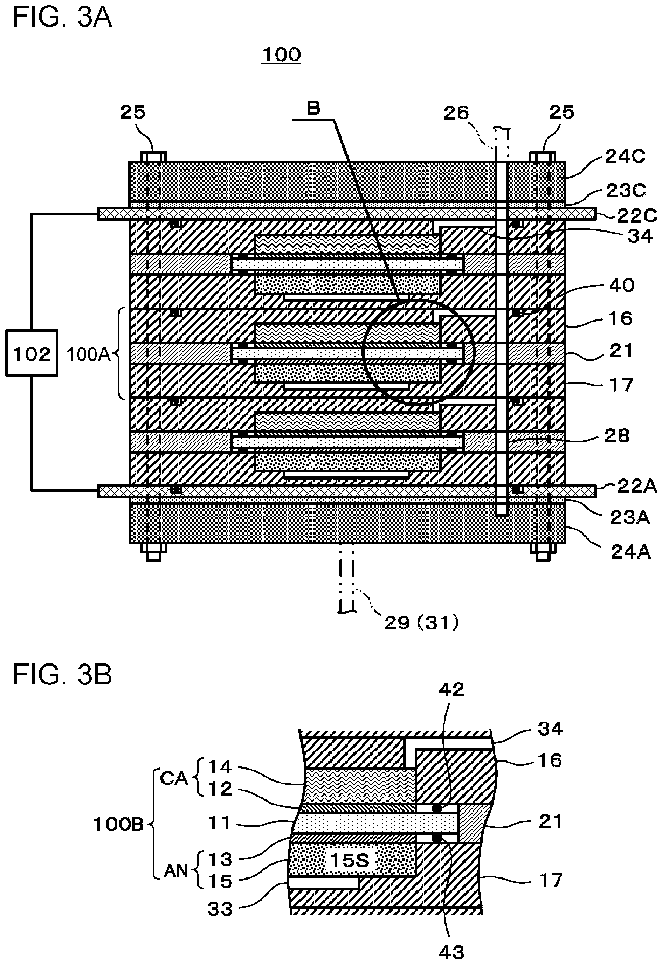

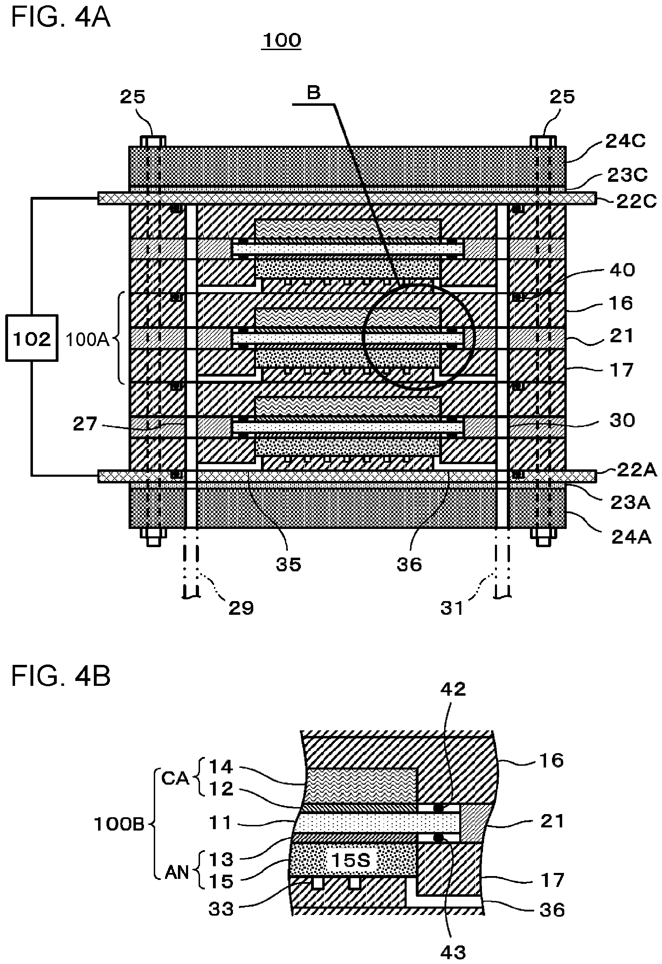

The electrochemical hydrogen pump 100 is an apparatus that moves hydrogen in hydrogen-containing gas supplied to an anode AN, to a cathode CA via an electrolyte membrane 11 to produce compressed hydrogen, by causing a voltage applicator 102 to apply a voltage between an anode catalyst layer 13 and a cathode catalyst layer 12 (see Figs. 3B and 4B). The electrochemical hydrogen pump 100 may include a stack in which a plurality of MEAs (cells) is stacked. A detailed configuration of the electrochemical hydrogen pump 100 will be described below.

Note that examples of the hydrogen-containing gas can include a reformed gas generated from a reforming reaction, such as a methane gas, a hydrogen gas in a low pressure state including steam generated from electrolysis of water, or the like.

The controller 50 causes the voltage applicator 102 to apply a voltage between the anode catalyst layer 13 and the cathode catalyst layer 12 after shutdown or at startup. The controller 50 may control an overall operation of the hydrogen system 200.

Here, "shutdown" of the hydrogen system 200 refers to shutdown of a compressing operation for supplying compressed hydrogen produced in the cathode CA from the cathode CA of the electrochemical hydrogen pump 100 to a hydrogen demanding unit. Note that examples of the hydrogen demanding unit can include a hydrogen reservoir, a fuel cell, piping of hydrogen infrastructure, or the like. In addition, examples of the hydrogen reservoir can include a dispenser installed in a hydrogen station, a hydrogen tank, or the like.

In addition, "at startup" of the hydrogen system 200 refers to an action from when auxiliary machines provided in the hydrogen system 200, such as valves, pumps, or the like, start to run until when a current flowing to an electrochemical cell 100B of the electrochemical hydrogen pump 100 reaches an intended current during the compressing operation of the hydrogen system 200. "During compressing operation" refers to a duration of an action for supplying the compressed hydrogen produced in the cathode CA from the cathode CA of the electrochemical hydrogen pump 100 to the hydrogen demanding unit.

Note that the "startup" of the hydrogen system 200 may start at timing when a startup signal appropriate for the controller 50 is inputted. Specifically, for example, if an operator makes a startup request via an input device (not illustrated), the startup signal is inputted to the controller 50. The input device may be provided in the hydrogen system 200 or may be an external input device (mobile terminal such as a smartphone, for example) which is not provided in the hydrogen system 200. In addition, when the "startup" of the hydrogen system 200 ends, supply of the compressed hydrogen produced in the cathode CA to the hydrogen demanding unit (compressing operation) may be started at appropriate time.

The controller 50 includes, for example, an arithmetic circuit and a storage circuit that stores a control program. Examples of the arithmetic circuit can include an MPU, a CPU, or the like. Examples of the storage circuit can include a memory or the like. The controller 50 may be made up of a single controller that performs concentrated control or may be made up of a plurality of controllers that cooperate with each other to perform distributed control.

[Configuration of Electrochemical Hydrogen Pump]

Figs. 3A and 4A are diagrams illustrating an example of the electrochemical hydrogen pump of the hydrogen system of the first embodiment. Fig. 3B is an enlarged view of part B of the electrochemical hydrogen pump of Fig. 3A. Fig. 4B is an enlarged view of part B of the electrochemical hydrogen pump of Fig. 4A.

Note that Fig. 3A illustrates, in plan view, a vertical cross section of the electrochemical hydrogen pump 100 including a straight line that passes through the center of the electrochemical hydrogen pump 100 and the center of a cathode gas lead-out manifold 28. In addition, Fig. 4A illustrates, in plan view, a vertical cross section of the electrochemical hydrogen pump 100 including a straight line that passes through the center of the electrochemical hydrogen pump 100, the center of an anode gas introduction manifold 27, and the center of an anode gas lead-out manifold 30.

The electrochemical hydrogen pump 100 includes at least one electrochemical cell 100B. As illustrated in Figs. 3B and 4B, the electrochemical cell 100B includes an electrolyte membrane 11, the anode AN, and the cathode CA. In a hydrogen pump unit 100A, the electrolyte membrane 11, the anode catalyst layer 13, the cathode catalyst layer 12, an anode gas diffusion layer 15, a cathode gas diffusion layer 14, an anode separator 17, and a cathode separator 16 are stacked.

Note that although three hydrogen pump units 100A are stacked in the electrochemical hydrogen pump 100, the number of the hydrogen pump units 100A is not limited thereto. That is, the number of the hydrogen pump units 100A can be set to an appropriate number based on operating conditions such as an amount of hydrogen compressed by the electrochemical hydrogen pump 100.

The anode AN is provided on one principal surface of the electrolyte membrane 11. The anode AN is an electrode that includes the anode catalyst layer 13 and the anode gas diffusion layer 15. Note that, in plan view, an annular sealing member 43 is provided so as to surround a periphery of the anode catalyst layer 13, and that the anode catalyst layer 13 is appropriately sealed by the sealing member 43.

The cathode CA is provided on another principal surface of the electrolyte membrane 11. The cathode CA is an electrode that includes the cathode catalyst layer 12 and the cathode gas diffusion layer 14. Note that, in plan view, an annular sealing member 42 is provided so as to surround a periphery of the cathode catalyst layer 12, and that the cathode catalyst layer 12 is appropriately sealed by the sealing member 42.

With the above, the electrolyte membrane 11 is held by the anode AN and the cathode CA such that the electrolyte membrane 11 is in contact with each of the anode catalyst layer 13 and the cathode catalyst layer 12.

The electrolyte membrane 11 may have any configuration as long as the electrolyte membrane 11 is a membrane having proton electrical conductivity. Examples of the electrolyte membrane 11 can include a sulfonic acid-modified fluorine-based polyelectrolyte membrane, a hydrocarbon-based electrolyte membrane, or the like. Specifically, for example, Nafion® (manufactured by Dupont de Nemours, Inc.), Aciplex® (manufactured by Asahi Kasei Corporation), or the like can be used as the electrolyte membrane 11, which is not limited thereto though.

The anode catalyst layer 13 is provided on the one principal surface of the electrolyte membrane 11. The anode catalyst layer 13 includes, but not limited to, carbon that can carry a catalyst metal (platinum, for example) in a dispersed state.

The cathode catalyst layer 12 is provided on the other principal surface of the electrolyte membrane 11. The cathode catalyst layer 12 includes, but not limited to, carbon that can carry the catalyst metal (platinum, for example) in the dispersed state.

Although a variety of methods for preparing a catalyst can be mentioned for the cathode catalyst layer 12 and the anode catalyst layer 13, there is no limitation thereto, in particular. For example, examples of carbon-based powder may include graphite, carbon black, powder such as conductive active carbon, or the like. A method of carrying platinum or other catalytic metal on a carbon carrier is not specifically limited. For example, a method such as powder mixing or liquid phase mixing may be used. Examples of the latter liquid phase mixing can include a method of dispersing and adsorbing a carrier such as carbon in a colloid liquid having catalytic components, or the like. A carried state of the catalytic metal such as platinum onto the carbon carrier is not specifically limited. For example, the catalytic metal may be microparticulated and carried on the carrier with high dispersion.

The cathode gas diffusion layer 14 is provided on the cathode catalyst layer 12. The cathode gas diffusion layer is made up of a porous material and has the electrical conductivity and gas diffusivity. It is desirable that the cathode gas layer have elasticity so as to appropriately follow displacement or deformation of a component which occurs due to a differential pressure between the cathode CA and the anode AN during the operation of the electrochemical hydrogen pump 100. For example, a carbon fiber sintered body can be used as a base material of the cathode gas diffusion layer, but the base material is not limited thereto.

The anode gas diffusion layer 15 is provided on the anode catalyst layer 13, and includes a porous sheet 15S containing the metal. That is, the porous sheet 15S is made of a metal material and has the electrical conductivity and the gas diffusivity. In addition, it is desirable that the porous sheet 15S have enough rigidity to withstand pressing of the electrolyte membrane 11 due to the differential pressure described above, during the operation of the electrochemical hydrogen pump 100.

Specifically, titanium may be used as a material of the porous sheet 15S, which is not limited thereto though. For example, in addition to titanium, a metal such as chromium, nickel, tungsten, tantalum, iron, manganese, or the like may also be used as the material of the porous sheet 15S. In addition, an alloy steel (such as stainless) which is an alloy of two or more kinds of these metals, TiN which is a nitride, TiC which is a carbide, or the like, may also be used. However, as a result of making the porous sheet 15S from titanium, when the titanium potential is positive, the fine thin film of TiOz is formed on titanium. This enables the hydrogen system 200 of the present embodiment to obtain the anode gas diffusion layer 15 having the high corrosion resistance in the acidic environment.

In addition, two or more kinds of porous sheets may be stacked in the anode gas diffusion layer 15. In this case, layers of the porous sheets may be bonded by diffusion bonding or the like. For example, the porous sheet near the electrolyte membrane 11 in the anode gas diffusion layer 15 may be made from titanium, and the porous sheet near the anode separator 17 may be made from stainless or the like. When the porous sheet near the electrolyte membrane 11 is made of titanium, it is possible to obtain the anode gas diffusion layer 15 having the high corrosion resistance in the acidic environment, as described above.

Further, in the anode gas diffusion layer 15, conductive coatings are applied to at least both principal surfaces of the porous sheet 15S in order to secure desired electrical conductivity between the anode catalyst layer 13 and the anode separator 17.

For example, by using plating or CVD coating, both of the principal surfaces of the porous sheet 15S may be covered by a highly conductive sheet-like coating film, or surfaces that make up of the porous sheet 15S may be covered with the highly conductive coating films.

Such a coating film may include, but not limited to, a platinum-plated film having a low resistance, or the like. For example, as a material of the coating film, in addition to platinum, other noble metals such as gold or ruthenium, or the like, diamond-like carbon, a metal carbide, a metal nitride, or the like may also be used.

Note that a thickness of the coating film may be set to smaller than or equal to 1/100 of a thickness of the porous sheet 15S. Such a thickness of the coating film can be measured, for example, by using a florescent X-ray analysis or the like.

The anode separator 17 is a member provided on the anode gas diffusion layer 15 of the anode AN. The cathode separator 16 is a member provided on the cathode gas diffusion layer 14 of the cathode CA.

A recess is provided at the center of each of the cathode separator 16 and the anode separator 17. The cathode gas diffusion layer 14 and the anode gas diffusion layer 15 are accommodated, respectively, in the recess of the cathode separator 16 and in the recess of the anode separator 17.

In this manner, the hydrogen pump unit 100A is formed by having the above-described electrochemical cell 100B interposed between the cathode separator 16 and the anode separator 17.

The principal surface of the cathode separator 16 in contact with the cathode gas diffusion layer 14 has a flat surface without providing a cathode gas flow channel. This makes it possible to increase a contact area between the cathode gas diffusion layer 14 and the cathode separator 16 as compared to a case where the cathode gas flow channel is provided on the principal surface of the cathode separator 16. Then, the electrochemical hydrogen pump 100 can reduce contact resistance between the cathode gas diffusion layer 14 and the cathode separator 16.

In contrast, in plan view, on the principal surface of the anode separator 17 in contact with the porous sheet 15S is provided a serpentine-like anode gas flow channel 33 that includes, for example, a plurality of U-shaped folded parts and a plurality of linear parts. Then, the linear parts of the anode gas flow channel 33 extend in a direction perpendicular to a paper surface of Fig. 4A. However, such an anode gas flow channel 33 is exemplary and not limited to this example. For example, the anode gas flow channel may include a plurality of linear flow channels.

In addition, an annular and planar insulator 21 is interposed between the conductive cathode separator 16 and the anode separator 17, the insulator 21 being provided so as to surround the periphery of the electrochemical cell 100B. This prevents a short circuit of the cathode separator 16 and the anode separator 17.

Here, the electrochemical hydrogen pump 100 includes a first end plate and a second end plate provided in a stacking direction on both ends of the hydrogen pump unit 100A, and a fastener 25 that fastens the hydrogen pump unit 100A and the first and second end plates in the stacking direction.

Note that in examples illustrated in Figs. 3A and 4A, a cathode end plate 24C and an anode end plate 24A correspond to the above-mentioned first end plate and second end plate, respectively. That is, the anode end plate 24A is an end plate provided on the anode separator 17 that is located at one end in the stacking direction in which each member of the hydrogen pump unit 100A is stacked. In addition, the cathode end plate 24C is an end plate provided on the cathode separator 16 that is located on the other end in the stacking direction in which each member of the hydrogen pump unit 100A is stacked.

The fastener 25 may have any configuration as long as the fastener 25 can fasten the hydrogen pump unit 100A, the cathode end plate 24C, and the anode end plate 24A in the stacking direction. Examples of the fastener 25 can include a bolt and a nut with a disc spring, or the like.

As illustrated in Fig. 3A, the cathode gas lead-out manifold 28 is made up of a series of through holes provided in each of members of the three hydrogen pump units 100A and the cathode end plate 24C, and non-through holes provided in the anode end plate 24A. In addition, a cathode gas lead-out path 26 is provided in the cathode end plate 24C. The cathode gas lead-out path 26 may be made up of piping through which the cathode off gas discharged from the cathode CA circulates. The cathode gas lead-out path 26 is in communication with the above-mentioned cathode gas lead-out manifold 28.

Further, the cathode gas lead-out manifold 28 is in communication with the cathode CA of each of the hydrogen pump unit 100A and each of cathode gas passage paths 34. As such, compressed hydrogen produced in the cathode CA of each of the hydrogen pump units 100A passes through each of the cathode gas passage paths 34, and then is converged in the cathode gas lead-out manifold 28. Then, the converged compressed hydrogen is guided to the cathode gas lead-out path 26.

In this manner, the cathode CA of each of the hydrogen pump units 100A is in communication through the cathode gas passage path 34 and the cathode gas lead-out manifold 28 of each of the hydrogen pump unit 100A.

In plan view, an annular sealing member 40 such as an O-ring is provided so as to surround the cathode gas lead-out manifold 28, between the cathode separator 16 and the anode separator 17, between the cathode separator 16 and a cathode feeder plate 22C, and between the anode separator 17 and an anode feeder plate 22A. The cathode gas lead-out manifold 28 is appropriately sealed by this sealing member 40.

As illustrated in Fig. 4A, an anode gas introduction path 29 is provided in the anode end plate 24A. The anode gas introduction path 29 may be made up of piping through which the hydrogen-containing gas supplied to the anode AN circulates. The anode gas introduction path 29 is in communication with the anode gas introduction manifold 27 shaped like a cylinder. Note that the anode gas introduction manifold 27 is made up of the series of through holes provided in each of the members of the three hydrogen pump units 100A and the anode end plate 24A.

In addition, the anode gas introduction manifold 27 is in communication with one end of the anode gas flow channel 33 of each of the hydrogen pump units 100A via each of first anode gas passage paths 35. As such, the hydrogen-containing gas supplied from the anode gas introduction path 29 to the anode gas introduction manifold 27 is distributed to each of the hydrogen pump units 100A through the first anode gas passage path 35 of each of the hydrogen pump units 100A. Then, while the distributed hydrogen-containing gas passes through the anode gas flow channel 33, the hydrogen-containing gas is supplied from the anode gas diffusion layer 15 to the anode catalyst layer 13.

In addition, as illustrated in Fig. 4A, an anode gas lead-out path 31 is provided in the anode end plate 24A. The anode gas lead-out path 31 may be made up of piping through which the hydrogen-containing gas discharged from the anode AN circulates. The anode gas lead-out path 31 is in communication with the cylindrical anode gas lead-out manifold 30. Note that the anode gas lead-out manifold 30 is made up of the series of the through holes provided in each member of the three hydrogen pump units 100A and the anode end plate 24A.

In addition, the anode gas lead-out manifold 30 is in communication with the other end of the anode gas flow channel 33 of each of the hydrogen pump units 100A, through each of second anode gas passage paths 36. As such, the hydrogen-containing gas that passes through the anode gas flow channel 33 of each of the hydrogen pump units 100A is supplied to the anode gas lead-out manifold 30 through each of the second anode gas passage paths 36 and converged here. Then, the converged hydrogen-containing gas is guided to the anode gas lead-out path 31.

In plan view, the annular sealing member 40 such as the O-ring is provided so as to surround the anode gas introduction manifold 27 and the anode gas lead-out manifold 30, between the cathode separator 16 and the anode separator 17, between the cathode separator 16 and the cathode feeder plate 22C, and between the anode separator 17 and the anode feeder plate 22A. The anode gas introduction manifold 27 and the anode gas lead-out manifold 30 are appropriately sealed by the sealing member 40.

As illustrated in Figs. 2, 3A, and 4A, the electrochemical hydrogen pump 100 includes the voltage applicator 102.

The voltage applicator 102 is an apparatus that applies a voltage between the anode catalyst layer 13 and the cathode catalyst layer 12. Specifically, a high potential of the voltage applicator 102 is applied to the anode catalyst layer 13, and a low potential of the voltage applicator 102 is applied to the cathode catalyst layer 12. The voltage applicator 102 may have any configuration as long as the voltage applicator 102 can apply a voltage between the anode catalyst layer 13 and the cathode catalyst layer 12. For example, the voltage applicator 102 may also be an apparatus that adjusts the voltage applied between the anode catalyst layer 13 and the cathode catalyst layer 12. In that case, the voltage applicator 102 includes a DC/DC converter when connected to a direct current power source such as a battery, a solar cell, a fuel cell or the like, and includes an AC/DC converter when connected with an alternating current power supply such as a commercial power supply.

In addition, the voltage applicator 102 may be a power type power source whereby a voltage applied between the anode catalyst layer 13 and the cathode catalyst layer 12 and a current flowing between the anode catalyst layer 13 and the cathode catalyst layer 12 are adjusted, such that electric power supplied to the hydrogen pump units 100A has a predetermined set value.

Note that in the examples illustrated in Figs. 3A and 4A, a terminal at the low electric potential of the voltage applicator 102 is connected with the cathode feeder plate 22C, and a terminal at the high electric potential of the voltage applicator 102 is connected with the anode feeder plate 22A. The cathode feeder plate 22C is electrically connected with the cathode separator 16 that is located at the other end in the above-mentioned stacking direction, and is disposed with the cathode end plate 24C with a cathode insulating plate 23C interposed in between. The anode feeder plate 22A is electrically connected with the anode separator 17 that is located at the one end in the above-mentioned stacking direction, and is disposed with the anode end plate 24A with an anode insulating plate 23A interposed in between.

Although not illustrated in Figs. 2, 3A, and 4A, members and equipment, which are necessary in a hydrogen compressing operation of the electrochemical hydrogen pump 100 of the hydrogen system 200 of the present embodiment, are provided as appropriate.

For example, in the hydrogen system 200, are provided, for example, a temperature detector that detects temperature of the electrochemical hydrogen pump 100, a pressure detector that detects a pressure of hydrogen compressed in the cathode CA of the electrochemical hydrogen pump 100, or the like.

In addition, in the hydrogen system 200, at an appropriate location of the anode gas introduction path 29, the anode gas lead-out path 31, and the cathode gas lead-out path 26 are provided valves for opening or closing these paths, or the like.

The above-described configuration of the electrochemical hydrogen pump 100 and the configuration of the hydrogen system 200 are exemplary and not limited to this example. For example, the electrochemical hydrogen pump 100 may adopt a dead-end structure whereby a total quantity of hydrogen ($H_2$) in the hydrogen-containing gas, which is supplied to the anode AN through the anode gas introduction manifold 27, is compressed in the cathode CA, rather than providing the anode gas lead-out manifold 30 and the anode gas lead-out path 31.

[Verification Experiment]

As described above, Fig. 1 merely illustrates the calculation result of the general "pH-potential diagram of titanium" in the water at 25°C on the assumption that the activity of $Ti^{3+}$ is $1 \times 10^{-6}$ mol/L.

In contrast, when the hydrogen system 200 is started, in the electrochemical hydrogen pump 100, in general, cell temperature is maintained at high temperatures of approximately 50°C to 80°C. In addition, the hydrogen-containing gas in a highly humidified state circulates in the anode AN of the electrochemical hydrogen pump 100. Thus, it is difficult to accurately understand from Fig. 1 a stable region of titanium ions that corresponds to the usage environment described above of the electrochemical hydrogen pump 100.

Hence, by using a titanium test piece, a verification experiment was conducted to confirm whether there is elution of titanium ions, when the temperature is approximately 50°C to 80°C and pH is 0.05, for a case where the titanium potential relative to a reference potential is approximately -0.10 V and a case where the titanium potential relative to the reference potential is approximately -0.42V, respectively.

According to this verification experiment, in any of the above cases, traces of corrosion which occurred on the Ti surface were confirmed by reflected electron images. In addition, it was confirmed at this time that titanium was present in a solution in which the titanium test piece was soaked.

It is believed that the above-described result of the verification experiment is a phenomenon attributable to the facts that a constant "RT/zF" in the following Nernst equation (1), which corresponds to a reaction ($TiO_2 + 4H^+ + e \rightarrow Ti^{3+} + 2H_2O$) by which $T^{3+}$ elutes is greater when the temperature is approximately 50°C to 80°C, as compared to a case where the temperature is 25°C, and that the activity of $Ti^{3+}$ of the expression (1) differs from the hypothetical condition of Fig. 1.

$$E = E_0 - 2.303 \cdot RT/zF \cdot (\log[Ti^{3+}] + 2\log[H_2O]) - 4\log[H_+] - \log[TiO_2]) \ldots (1)$$

In expression (1), $E_0$ is a standard oxidation-reduction potential, R is a gas constant, T is an absolute temperature, z is a measured ionic charge, and F is a Faraday constant.

Here, the present disclosers supposed that in the usage environment of the electrochemical hydrogen pump 100, a product of the constant "RT/zF" and the log [$Ti^{3+}$] in equation (1) might act to shift the potential of the vertical axis to the plus side, as compared to the pH-potential diagram (Fig. 1) of titanium (Ti) in general.

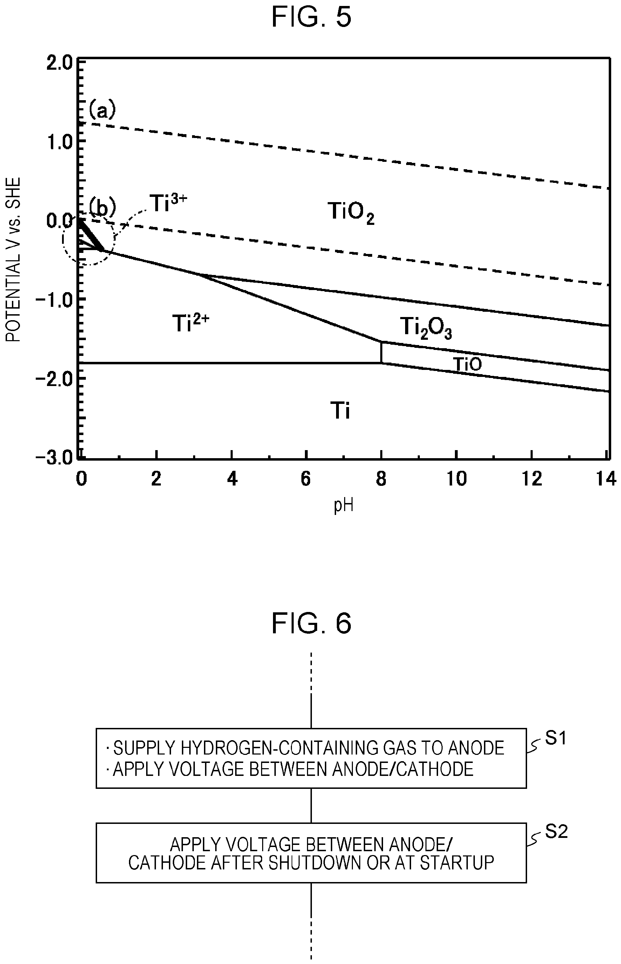

Hence, based on the result of the above verification result where the corrosion occurred at the temperature of 65°C and at approximately -0. 1V, as in the pH-potential diagram of titanium (Ti) in Fig. 5, the region where $Ti^{3+}$ eluted from the surface of oxidized titanium was hypothesized with a thick straight line (solid line). Then, it is estimated that when pH is zero, the activity of $Ti^{3+}$ in the Nernst expression is approximately $1\times10^{-9}$ mol/L to $1\times10^{-8}$ mol/L (1), near a contact boundary of the electrolyte membrane 11 and titanium (TiOz). Then, this estimated value is consistent with the fact that a surface concentration of $Ti^{3+}$ is lower than "$1\times10^{-6}$ mol/L" because in the usage environment of the electrochemical hydrogen pump 100, the hydrogen-containing gas circulates in the anode AN.

In this manner, it was found out that the titanium ions might elute even when the potential of the anode AN became approximately -0.1V, for example, due to a difference in the partial pressures of hydrogen present in each of the anode AN and the cathode CA.

[Operation]

Fig. 6 is a flowchart illustrating an example of the operation of the hydrogen system of the first embodiment.

The following operation may be performed, for example, by the arithmetic circuit of the controller 50 reading the control program from the storage circuit of the controller 50. However, it is not necessarily essential that the controller 50 perform the following operation. An operator may perform some of the operation. In the following example, a description will be given of a case where the operation is controlled by the controller 50.

First, in step S1, a low-pressure hydrogen-containing gas is supplied to the anode AN of the electrochemical hydrogen pump 100, and a voltage of the voltage applicator 102 is applied between the anode catalyst layer 13 and the cathode catalyst layer 12 of the electrochemical hydrogen pump 100. Then, in the anode catalyst layer 13 of the anode AN, hydrogen molecules separate into protons and electrons (expression (2)). Protons conduct in the electrolyte membrane 11 and move to the cathode catalyst layer 12. Electrons move to the cathode catalyst layer 12 via the voltage applicator 102.

Then, hydrogen molecules are generated again in the cathode catalyst layer 12 (expression (3)). Note that it is known that when the protons conduct through the electrolyte membrane 11, a predetermined amount of water accompanies the protons and moves from the anode AN to the cathode CA as electroosmotic water.

At this time, for example, if compressed hydrogen produced in the cathode CA of the electrochemical hydrogen pump 100 is supplied to the hydrogen demanding unit through the cathode gas lead-out path 26, it is possible to produce compressed hydrogen ($H_2$) in the cathode CA by increasing a pressure loss of the cathode gas lead-out path 26 by using a back pressure valve, a regulating valve, or the like provided in the cathode gas lead-out path 26. Here, increasing the pressure loss of the cathode gas lead-out path 26 corresponds to reducing opening of the back pressure valve or the regulating valve provided in the cathode gas lead-out path 26.

Anode:

$$Hz \text{ (low pressure)} \rightarrow 2H^+ + 2e^- \text{ ...} \qquad (2)$$

Cathode:

$$2H^+ + 2e^- \rightarrow H_2 \text{ (high pressure) ...} \qquad (3)$$

In this manner, in the hydrogen system 200, the operation of moving the hydrogen in the hydrogen-containing gas supplied to the anode AN to the cathode CA by applying the voltage between the anode AN and the cathode CA, which are provided with the electrolyte membrane 11 interposed therebetween, and producing the compressed hydrogen is performed. In this operation, for example, before the compressed hydrogen in the cathode CA is supplied to the hydrogen reservoir, the compressed hydrogen is boosted to a predetermined supply voltage and then the compressed hydrogen is supplied to the hydrogen reservoir. As the predetermined supply pressure, 40 MPa, 80 MPa, or the like are exemplified.

Next, the compressing operation (hereinafter referred to as compressing operation of the hydrogen system 200) for supplying the compressed hydrogen produced in the cathode CA from the cathode CA of the electrochemical hydrogen pump 100 to the hydrogen demanding unit is performed, for example, with the following procedure.

The compressed hydrogen produced in the cathode CA of the electrochemical hydrogen pump 100 is discharged from the cathode CA through the cathode gas lead-out path 26 to the outside of the electrochemical hydrogen pump 100. For example, after moisture and impurities or the like are removed, the compressed hydrogen flowing through the cathode gas lead-out path 26 may be supplied to the hydrogen reservoir, which is an example of the hydrogen demanding unit, and temporarily stored in the hydrogen reservoir. The compressed hydrogen stored in the hydrogen reservoir may be supplied to a fuel cell at appropriate time, which is an example of the hydrogen demanding unit. Note that the compressed hydrogen produced in the cathode CA may be supplied directly to the fuel cell, without passing through the hydrogen reservoir.

Next, in step S2, after the compressing operation of the hydrogen system 200 is stopped or when the hydrogen system 200 is started, an operation of applying a voltage of the voltage applicator 102 between the anode AN and the cathode CA of the electrochemical hydrogen pump 100 is performed.

Here, the shutdown of the hydrogen system 200 and the startup of the hydrogen system 200 as described above may be performed with the following procedure (timing and method) by way of example.

For example, if the compressed hydrogen produced in the cathode CA of the electrochemical hydrogen pump 100 is temporarily stored in the hydrogen reservoir, the compressing operation of the hydrogen system 200 is performed until the amount of hydrogen in the hydrogen reservoir is full. However, once the amount of the hydrogen in the hydrogen reservoir is full, it is necessary to stop the compressing operation of the hydrogen system 200 until the hydrogen reservoir has a free capacity (for example, until supply of hydrogen from the hydrogen reservoir to the outside of the hydrogen reservoir starts) or until the hydrogen system 200 is connected with another hydrogen reservoir having the free capacity. Thereafter, when the amount of hydrogen in the hydrogen reservoir falls below a predetermined amount, it is necessary to start the hydrogen system 200.

Hence, first, when the controller 50 receives a signal from a pressure gauge provided in the hydrogen reservoir indicating that the amount of hydrogen in the hydrogen reservoir is full, the controller 50 issues a command to the voltage applicator 102 to reduce the current flowing between the anode catalyst layer 13 and the cathode catalyst layer 12.

Here, the current flowing between the anode catalyst layer 13 and the cathode catalyst layer 12 when the compressing operation of the hydrogen system 200 is stopped may be set to an appropriate value, depending on the pressure of the compressed hydrogen present in the cathode CA, and the amount of hydrogen that moves from the cathode CA to the anode AN via the electrolyte membrane 11 due to a differential pressure between the cathode CA and the anode AN. For example, the pressure of the compressed hydrogen present in the cathode CA can be maintained at a predetermined value, by adjusting the above-mentioned current in accordance with the amount of hydrogen that moves from the cathode CA to the anode AN via the electrolyte membrane 11 due to the differential pressure between the cathode CA and the anode AN. This current may be smaller than or equal to 1/10 of the current flowing between the anode catalyst layer 13 and the cathode catalyst layer 12 during the operation.

Next, a flow rate of the hydrogen-containing gas supplied to the anode AN is reduced to an appropriate amount by using a flow regulator in accordance with the current flowing between the anode catalyst layer 13 and the cathode catalyst layer 12 when the compressing operation of the hydrogen system 200 is stopped. Details will be described in a second embodiment.

In this manner the compressing operation of the hydrogen system 200 is stopped. However, the procedure for stopping the compressing operation described above is exemplary and not limited to this example.

Note that at appropriate time after the compressing operation of the hydrogen system 200 is stopped, the supply of the hydrogen-containing gas to the anode AN may be stopped and the voltage application between the anode catalyst layer 13 and the cathode catalyst layer 12 may be stopped. Then, the above-mentioned differential pressure is reduced over time by the hydrogen being moved from the cathode CA to the anode AN via the electrolyte membrane 11 due to the differential pressure between the cathode CA and the anode AN.

Next, when an appropriate start signal is inputted to the controller 50, the supply of the hydrogen-containing gas to the anode AN is started at appropriate time, and the operation of applying a voltage between the anode AN and the cathode CA is performed.

After the above-mentioned voltage application is started, the applied voltage may be increased until the current flowing to the electrochemical cell 100B reaches the intended current during the compressing operation of the hydrogen system 200. Alternatively, the applied voltage may be increased until the intended current is reached, after the operation of maintaining the current flowing to the electrochemical cell 100B at a current lower than the intended current mentioned above (hereinafter referred to as a low current).

Note that when the current flowing to the electrochemical cell 100B is maintained at the low current, this current may be set to an appropriate value, depending on the amount of hydrogen that moves from the cathode CA to the anode AN via the electrolyte membrane 11 due to the pressure of the compressed hydrogen present in the cathode CA, in other words, the differential pressure between the cathode CA and the anode AN. The pressure of the compressed hydrogen present in the cathode CA can be maintained at the predetermined value, for example, by adjusting the above-mentioned current such that the amount of hydrogen, which is greater than the amount of hydrogen that moves from the cathode CA to the anode AN via the electrolyte membrane 11 due to the differential pressure between the cathode CA and the anode AN, moves from the anode AN to the cathode CA.

Here, when the hydrogen-contained gas supplied to the anode AN is in a wet state at the startup of the hydrogen system 200, the water content ratio of the electrolyte membrane 11 can be increased with water in the hydrogen-containing gas, in the operation of maintaining the current flowing to the electrochemical cell 100B at the low current. The increase in the water content ratio of the electrolyte membrane 11 may be confirmed with any method. For example, the increase in the water content ratio of the electrolyte membrane 11 may be confirmed, for example, by a decrease in the applied voltage or may be confirmed by the low current or a duration of a startup operation for maintaining the cathode at a low pressure. Note that details of the operation of maintaining the current flowing to the above-mentioned electrochemical cell 100B at the low current will be described in a fifth embodiment.

As described above, the hydrogen system 200 and the method of operating the hydrogen system 200 of the present embodiment may suppress the deterioration of the electrolyte membrane 11 as compared to the related art. Specifically, with the hydrogen system 200 and the method of operating the hydrogen system 200 of the present embodiment, by causing the voltage applicator 102 to apply a voltage between the anode catalyst layer 13 and the cathode catalyst layer 12 at appropriate time after the compressing operation of the hydrogen system 200 is stopped or when the hydrogen system 200 is started, the anode potential of the electrochemical hydrogen pump 100 is less likely to become negative, as compared to the case where such voltage control is not performed. Then, with the hydrogen system 200 and the method of operating the hydrogen system 200 of the present embodiment, the elution of the metal contained in the porous sheet 15S in water can be suppressed. This enables the hydrogen system 200 and the method of operating the hydrogen system 200 of the present embodiment to reduce the possibility that the metal ions modify the sulfonic acid group in the electrolyte membrane 11. Therefore, the deterioration of the electrolyte membrane 11 is suppressed as compared to the related art.

The hydrogen partial pressure of the anode may be higher than the hydrogen partial pressure of the cathode after the compressing operation of the hydrogen system 200 is stopped or when the hydrogen system 200 is started. For example, after the shutdown, if the amount of outside air mixing into the cathode CA from the outside is greater than the amount of outside air mixing into the anode AN from the outside, the hydrogen partial pressure of the anode AN may be higher than the hydrogen partial pressure of the cathode CA. Then, due to the elution of the metal ions contained in the anode gas diffusion layer 15, ion-exchange may occur between the metal ions and the protons of the sulfonic acid group in the electrolyte membrane 11. As a result, the electrolyte membrane 11 may deteriorate.

Hence, with the hydrogen system 200 and the method of operating the hydrogen system 200 of the present embodiment, by causing the voltage applicator 102 to apply the above-mentioned voltage after the shutdown or at the startup, the elution of the metal ions is suppressed, as compared to the case where such voltage control is not performed. As a result, ion-exchange is inhibited from occurring between the metal ions and the proton of the sulfonic acid group in the electrolyte membrane 11. Consequently, the electrolyte membrane 11 is less likely to deteriorate.

(First Example)

A hydrogen system 200 of this example is similar to the hydrogen system 200 of the first embodiment, except control contents of the controller 50 to be described below.

After the compressing operation of the hydrogen system 200 is stopped, the controller 50 causes the voltage applicator 102 to apply a voltage between the anode catalyst layer 13 and the cathode catalyst layer 12 after the supply of the hydrogen-containing gas to the anode AN is stopped.

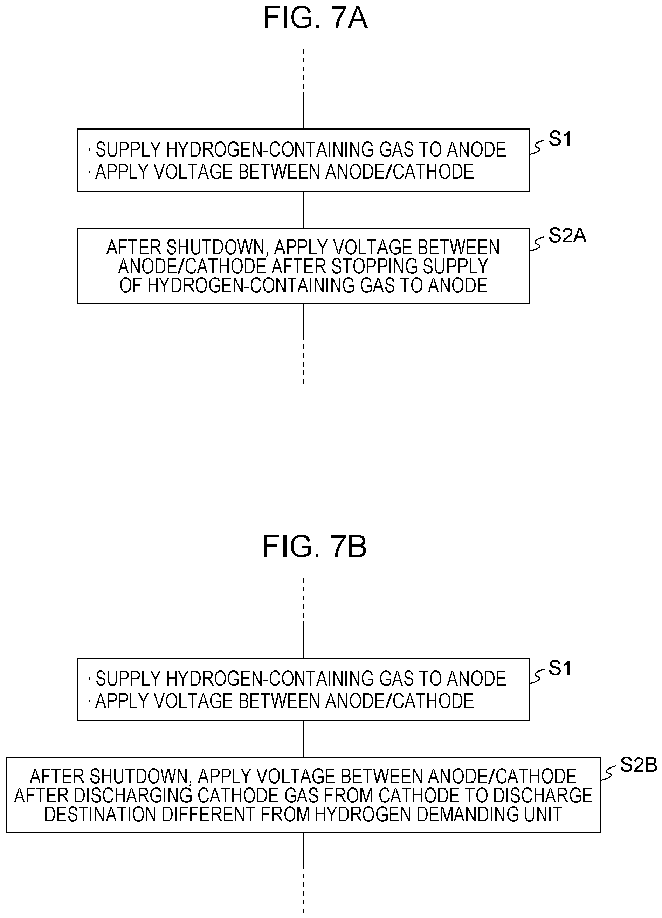

Fig. 7A illustrates an example of the operation of the hydrogen system of the first example of the first embodiment. The following operation may be performed, for example, by the arithmetic circuit of the controller 50 reading the control program from the storage circuit of the controller 50. However, it is not necessarily essential that the controller 50 perform the following operation. The operator may perform some of the operation. In the following example, a description will be given of the case where the operation is controlled by the controller 50.

Step S 1 of Fig. 7A is similar to step S1 of Fig. 6, and thus a description thereof will be omitted.

In step S2A, after the compressing operation of the hydrogen system 200 is stopped, the operation of applying the voltage of the voltage applicator 102 between the anode AN and the cathode CA of the electrochemical hydrogen pump 100 is performed after the supply of the hydrogen-containing gas to the anode AN is stopped. Here, the specific procedure of the operation of step S2A is similar to step S2 of Fig. 6, and thus a description thereof will be omitted.

The hydrogen partial pressure of the anode AN may be higher than the hydrogen pressure of the cathode CA after the compressing operation of the hydrogen system 200 is stopped. For example, if the amount of outside air mixing into the cathode CA from the outside is greater than the amount of outside air mixing into the anode AN after the hydrogen system 200 is stopped, the hydrogen partial pressure of the anode AN may be higher than the hydrogen partial pressure of the cathode CA. Then, due to the elution of the metal ions contained in the anode gas diffusion layer 15, ion-exchange may occur between the metal ions and the protons of the sulfonic acid group in the electrolyte membrane 11. As a result, the electrolyte membrane 11 may deteriorate.

Hence, with the hydrogen system 200 and the method of operating the hydrogen system 200 of this example, by causing the voltage applicator 102 to apply the above-mentioned voltage after the shutdown, the elution of the metal ions is suppressed, as compared to the case where such voltage control is not performed. As a result, ion-exchange is inhibited from occurring between the metal ions and the proton of the sulfonic acid group in the electrolyte membrane 11. Consequently, the electrolyte membrane 11 is less likely to deteriorate.

The hydrogen system 200 and the method of operating the hydrogen system 200 of this example may be similar to the first embodiment, except for the characteristics described above.

(Second Example)

A hydrogen system 200 of this example is similar to the hydrogen system 200 of the first embodiment, except the control contents of the controller 50 to be described below.

After the compressing operation of the hydrogen system 200 is stopped, the controller 50 causes the voltage applicator 102 to apply a voltage between the anode catalyst layer 13 and the cathode catalyst layer 12 after discharging the cathode off gas from the cathode CA to a discharge destination different from the hydrogen demanding unit. Note that as an example of the "discharge destination different from the hydrogen demanding unit", the anode AN or outside of the hydrogen system 200 can be exemplified. Examples of the outside of the hydrogen system 200 can include inside of the atmosphere. A flow channel in communication with an anode outlet when the cathode off gas is discharged from the cathode CA to the anode AN may be opened or may be closed by an appropriate on-off valve provided in the flow channel. Note that when the flow channel in communication with the anode outlet is opened, and this flow channel is opened to the atmosphere, finally, the cathode off gas is discharged into the atmosphere, that is, the outside of the hydrogen system 200.

Fig. 7B is a flowchart illustrating an example of the operation of the hydrogen system of the second example of the first embodiment. The following operation may be performed, for example, by the arithmetic circuit of the controller 50 reading the control program from the storage circuit of the controller 50. However, it is not necessarily essential that the controller 50 perform the following operation. The operator may perform some of the operation. In the following example, a description will be given of the case where the operation is controlled by the controller 50.

Step S 1 of Fig. 7B is similar to step S1 of Fig. 6, and thus a description thereof will be omitted.

In step S2B, after the compressing operation of the hydrogen system 200 is stopped, the operation of applying a voltage of the voltage applicator 102 between the anode AN and the cathode CA of the electrochemical hydrogen pump 100 is performed after discharging the cathode off gas from the cathode CA to the discharge destination different from the hydrogen demanding unit. Here, the specific procedure of the operation of step S2B is similar to step S2 of Fig. 6, and thus a description thereof will be omitted.

After the compressing operation of the hydrogen system 200 is stopped, the hydrogen partial pressure of the anode AN may be higher than the hydrogen partial pressure of the cathode CA after discharging the cathode off gas from the cathode CA to the discharge destination different from the hydrogen demanding unit. For example, after the hydrogen system 200 is stopped, if the amount of outside air mixing into the cathode CA from the outside is greater than the amount of outside air mixing into the anode AN from the outside, the hydrogen partial pressure of the anode AN may be higher than the hydrogen partial pressure of the cathode CA. Then, due to the elution of the metal ions contained in the anode gas diffusion layer 15, ion-exchange may occur between the metal ions and the protons of the sulfonic acid group in the electrolyte membrane 11. As a result, the electrolyte membrane 11 may deteriorate.

Hence, with the hydrogen system 200 and the method of operating the hydrogen system 200 of this example, after the shutdown, by causing the voltage applicator 102 to apply the above-mentioned voltage after discharging the cathode off gas from the cathode CA to the discharge destination different from the hydrogen demanding unit, the elution of the metal ions is suppressed, as compared to the case where such voltage control is not performed. As a result, ion-exchange is inhibited from occurring between the metal ions and the proton of the sulfonic acid group in the electrolyte membrane 11. Consequently, the electrolyte membrane 11 is less likely to deteriorate.

The hydrogen system 200 and the method of operating the hydrogen system 200 of this example may be similar to the first embodiment or the first example of the first embodiment, except for the characteristics described above.

(Third Example)

A hydrogen system 200 of this example is similar to the hydrogen system 200 of the first embodiment, except the control contents of the controller 50 to be described below.

After the compressing operation of the hydrogen system 200 is stopped, the controller 50 causes the voltage applicator 102 to apply, between the anode catalyst layer 13 and the cathode catalyst layer 12, a voltage smaller than the maximum voltage to be applied therebetween during the operation (hereinafter referred to as the maximum voltage). For example, after the compressing operation of the hydrogen system 200 is stopped, the controller 50 may cause the voltage applicator 102 to apply a voltage smaller than or equal to 1/10 of the maximum voltage between the anode catalyst layer 13 and the cathode catalyst layer 12.

With the above, after the compressing operation of the hydrogen system 200 is stopped, by selecting, as a voltage applied between the anode catalyst layer 13 and the cathode catalyst layer 12 to suppress the deterioration of the electrolyte membrane 11, a voltage smaller than the maximum voltage, the hydrogen system 200 of this example can reduce the power consumed by the voltage applicator 102, as compared to the case where the maximum voltage is applied therebetween after the compressing operation of the hydrogen system 200 is stopped. For example, after the compressing operation of the hydrogen system 200 is stopped, by selecting the voltage smaller than or equal to 1/10 of the maximum voltage as the voltage applied between the anode catalyst layer 13 and the cathode catalyst layer 12 to suppress the deterioration of the electrolyte membrane 11, the hydrogen system 200 of this example can reduce the power consumed by the voltage applicator 102, as compared to the case where a voltage greater than 1/10 of the maximum voltage is applied therebetween.

The hydrogen system 200 of this example may be similar to the hydrogen system 200 of any of the first embodiment and the first and second examples of the first embodiment, except for the characteristics described above.

(Fourth Example)

A hydrogen system 200 of this example is similar to the hydrogen system 200 of the first embodiment, except the control contents of the controller 50 to be described below.

After the compressing operation of the hydrogen system 200 is stopped, the controller 50 causes the voltage applicator 102 to apply, between the anode catalyst layer 13 and the cathode catalyst layer 12, a voltage which is smaller than an applied voltage when an internal pressure of the cathode CA (hereinafter referred to as a cathode pressure) reaches the supply pressure of the compressed hydrogen to the hydrogen demanding unit. Note that 40 MPa, 80 MPa, and the like are exemplified as the above-mentioned supply voltage.

With the above, after the compressing operation of the hydrogen system 200 is stopped, by selecting, as the voltage applied between the anode catalyst layer 13 and the cathode catalyst layer 12 to suppress the deterioration of the electrolyte membrane 11, a voltage which is smaller than the applied voltage when the cathode pressure reaches the supply pressure of the compressed hydrogen to the hydrogen demanding unit, the hydrogen system 200 of this example can reduce the power consumed by the voltage applicator 102, as compared to the case where such an applied voltage is applied therebetween after the compressing operation of the hydrogen system 200 is stopped.

The hydrogen system 200 of this example may be similar to any of the first embodiment, the first to third examples of the first embodiment, except for the characteristics described above.

(Fifth Example)

A hydrogen system 200 of this example is similar to the hydrogen system 200 of the first embodiment, except the control contents of the controller 50 to be described below.

After the compressing operation of the hydrogen system 200 is stopped, the controller 50 causes the voltage applicator 102 to apply, between the anode catalyst layer 13 and the cathode catalyst layer 12, a voltage necessary for moving, from the anode AN to the cathode CA, hydrogen of an amount which corresponds to the amount of hydrogen returning from the cathode CA to the anode AN via the electrolyte membrane 11.

With the above, after the compressing operation of the hydrogen system 200 is stopped, by setting the voltage applied between the anode catalyst layer 13 and the cathode catalyst layer 12 to suppress the deterioration of the electrolyte membrane 11, as described above, in consideration of the amount of hydrogen that moves from the cathode CA to the anode AN via the electrolyte membrane 11 due to the differential pressure between the cathode CA and the anode AN, the hydrogen system 200 of this example can maintain the pressure of the compressed hydrogen present in the cathode CA of the electrochemical hydrogen pump 100 at a desired value after the compressing operation of the hydrogen system 200 is stopped.

The hydrogen system 200 of this example may be similar to the hydrogen system 200 of any of the first embodiment and the first to fourth examples of the first embodiment, except for the characteristics described above.

(Sixth Example)

A hydrogen system 200 of this example is similar to the hydrogen system 200 of the first embodiment, except the control contents of the controller 50 to be described below.

After the compressing operation of the hydrogen system 200 is stopped, the controller 50 causes the voltage applicator 102 to apply a voltage smaller than or equal to 0.1 V per one cell between the anode catalyst layer 13 and the cathode catalyst layer 12. Note that "one cell" refers to the single electrochemical cell 100B in the examples illustrated in Figs. 3B and 4B.

With the above, after the compressing operation of the hydrogen system 200 is stopped, by selecting the voltage smaller than or equal to 0.1 V per one cell as the voltage applied between the anode catalyst layer 13 and the cathode catalyst layer 12 to suppress the deterioration of the electrolyte membrane 11, the hydrogen system 200 of this example can reduce the power consumed by the voltage applicator 102 as compared to the case where a voltage exceeding 0.1 V per one cell is applied therebetween after the compressing operation of the hydrogen system 200 is stopped.

The hydrogen system 200 of this example may be similar to the hydrogen system 200 of any of the first embodiment and the first to fifth examples of the first embodiment, except for the characteristics described above.

(Seventh Example)

The hydrogen system 200 of this example is similar to the hydrogen system 200 of the first embodiment, except for the voltage applied between the anode catalyst layer 13 and the cathode catalyst layer 12, to be described below.

The voltage applied between the anode catalyst layer 13 and the cathode catalyst layer 12 by the voltage applicator 102 after the compressing operation of the hydrogen system 200 is stopped is a voltage necessary for increasing to 0 V or higher an anode potential of the electrochemical hydrogen pump 100 which is assumed if the voltage applicator 102 applies no voltage therebetween after the compressing operation of the hydrogen system 200 is stopped.

With the above, after the compressing operation of the hydrogen system 200 is stopped, by selecting, as the voltage applied between the anode catalyst layer 13 and the cathode catalyst layer 12 to suppress the deterioration of the electrolyte membrane 11, the voltage necessary for increasing to 0 V or higher the anode potential of the electrochemical hydrogen pump 100 which is assumed if the voltage applicator 102 applies no voltage therebetween after the compressing operation of the hydrogen system 200 is stopped, the hydrogen system 200 of this example can suppress the elution of the metal contained in the porous sheet 15S in water because the anode potential is less likely to become negative, as compared to the case where the voltage below such a necessary voltage is applied therebetween after the compressing operation of the hydrogen system 200 is stopped. That is, the deterioration of the electrolyte membrane 11 can be further suppressed.

The hydrogen system 200 of this example may be similar to any of the first embodiment and first to sixth examples of the first embodiment, except for the characteristics described above.

(Second Embodiment)

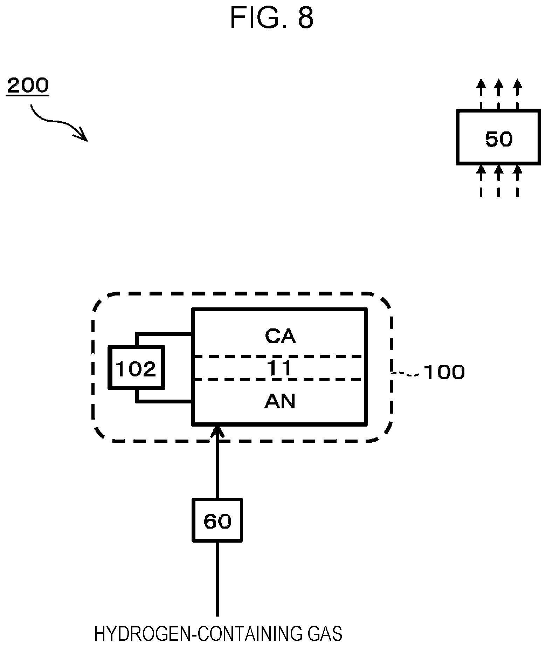

Fig. 8 is a diagram illustrating an example of a hydrogen system of a second embodiment.

In the example illustrated in Fig. 8, the hydrogen system 200 of the present embodiment includes the electrochemical hydrogen pump 100, a flow regulator 60, and the controller 50. The electrochemical hydrogen pump 100 is similar to the first embodiment, and thus a description thereof will be omitted.

The flow regulator 60 is an apparatus that regulates a flow rate of a hydrogen containing gas supplied to the anode AN. The flow regulator 60 may have any configuration as long as the flow regulator 60 can regulate the flow rate of such a hydrogen-containing gas. For example, the flow regulator 60 may be provided in the anode gas introduction path 29 of Fig. 4A. As the flow regulator 60, a flow regulating device including a flow regulating valve, a mass flow controller or a booster, or the like can be exemplified. Note that the flow regulator 60 may include a flow meter together with the above-mentioned flow regulating device.

When the voltage applicator 102 is caused to apply a voltage between the anode catalyst layer 13 and the cathode catalyst layer 12 after the compressing operation of the hydrogen system 200 is stopped, the controller 50 controls the flow regulator 60 to supply the hydrogen-containing gas to the anode AN at a flow rate smaller than the flow rate of the hydrogen-containing gas supplied to the anode AN during the operation.

In the electrochemical hydrogen pump 100, if the voltage is applied between the anode catalyst layer 13 and the cathode catalyst layer 12 to suppress the deterioration of the electrolyte membrane 11 after the compressing operation of the hydrogen system 200 is stopped, hydrogen moves from the anode AN to the cathode CA via the electrolyte membrane 11. Then, with the amount of hydrogen present in the anode AN decreasing, a pressure inside the anode AN is reduced. Thus, the anode AN may become a negative pressure. Then, if air enters the anode AN from the outside due to the negative pressure of the anode AN, the electrochemical cell 100B of the electrochemical hydrogen pump 100 may deteriorate.

Hence, in the hydrogen system 200 of the present embodiment, the flow regulator 60 is controlled by the controller 50, as described above.

As such, even if hydrogen moves from the anode AN to the cathode CA via the electrolyte membrane 11 when the voltage is applied between the anode catalyst layer 13 and the cathode catalyst layer 12 to suppress the deterioration of the electrolyte membrane 11 after the compressing operation of the hydrogen system 200 is compressed, the hydrogen system 200 of the present embodiment can charge the hydrogen-containing gas to the anode AN by using the flow regulator 60. Then, a possibility that the anode AN becomes the negative pressure after the compressing operation of the hydrogen system 200 is stopped is reduced.

In addition, because the compressed hydrogen produced in the cathode CA is not supplied from the cathode CA to the hydrogen demanding unit after the compressing operation of the hydrogen system 200 is stopped, the hydrogen system 200 of the present embodiment can make the flow rate of the hydrogen-containing gas charged into the anode AN smaller than the flow rate of the hydrogen-containing gas supplied to the anode AN during the operation.

The hydrogen system 200 of the present embodiment may be similar to the hydrogen system 200 of any of the first embodiment and the first to seventh examples of the first embodiment, except for the characteristics described above.

(Modification Example)

A hydrogen system 200 of this modification example is similar to the hydrogen system 200 of the second embodiment, except the control contents of the controller 50 to be described below.

When the voltage applicator 102 is caused to apply a voltage between the anode catalyst layer 13 and the cathode catalyst layer 12 after the compressing operation of the hydrogen system 200 is stopped, the controller 50 controls the flow regulator 60 and does not supply the hydrogen-containing gas to the anode AN.

With the above, the hydrogen system 200 of this modification example can reduce the amount of consumption of the hydrogen-containing gas from the supply source of the hydrogen-containing gas as compared to the hydrogen system 200 of the second embodiment. As the supply sources of the hydrogen-containing gas, the hydrogen tank, the hydrogen infrastructure, the water electrolysis apparatus, and the like are exemplified.

A hydrogen system 200 of this modification example may be similar to any of the first embodiment, the first to seventh examples of the first embodiment, and the second embodiment, except for the characteristics described above.

(Third Embodiment)

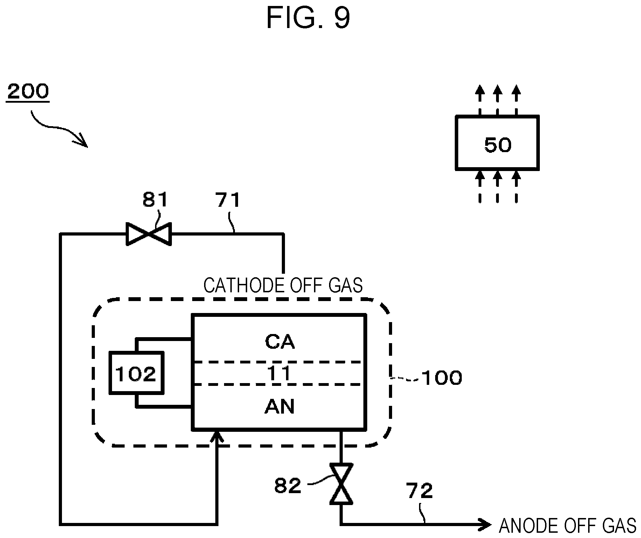

Fig. 9 is a diagram illustrating an example of a hydrogen system of a third embodiment.

In the example illustrated in Fig. 9, the hydrogen system 200 of the present embodiment includes the electrochemical hydrogen pump 100, a first flow channel 71, a second flow channel 72, a first on-off valve 81, a second on-off valve 82, and the controller 50. The electrochemical hydrogen pump 100 is similar to the first embodiment, and thus a description thereof will be omitted.

The first flow channel 71 is a flow channel for supplying to the anode AN a cathode off gas discharged from the cathode CA of the electrochemical hydrogen pump 100. Note that such a cathode off gas is a gas containing compressed hydrogen produced in the cathode CA.

An upstream end of the first flow channel 71 may be connected to any location as long as the location is in communication with the cathode CA of the electrochemical hydrogen pump 100. For example, the first flow channel 71 may extend so as to branch off from the cathode gas lead-out path 26 of Fig. 3A or may extend so as to communicate with another cathode gas lead-out manifold separate from the cathode gas lead-out manifold 28 of Fig. 3A. However, if the first flow channel 71 is configured as in the former, it is possible to consolidate points for discharging a gas from the cathode CA, in the electrochemical hydrogen pump 100.

A downstream end of the first flow channel 71 may be connected to any location as long as the location is in communication with the anode AN of the electrochemical hydrogen pump 100. For example, the first flow channel 71 may extend to connect to the anode gas introduction path 29 of Fig. 4A or may extend to communicate with another anode gas introduction manifold separate from the anode gas introduction manifold 27 of Fig. 4A. However, if the first flow channel 71 is configured as in the former, it is possible to consolidate points for introducing the gas to the anode AN, in the electrochemical hydrogen pump 100.

The second flow channel 72 is a flow channel through which an anode off gas discharged from the anode AN of the electrochemical hydrogen pump 100 flows. Note that such an anode off gas is a gas containing the hydrogen-containing gas that passes through the anode gas flow channel 33.

An upstream end of the second flow channel 72 may be connected to any location as long as the location is in communication with the anode AN of the electrochemical hydrogen pump 100. For example, the second flow channel 72 may extend so as to connect to the anode gas lead-out path 31 of Fig. 4A.

A downstream end of the second flow channel 72 may be connected to an appropriate apparatus outside of the hydrogen system 200 or may connect to a flow channel through which the hydrogen-containing gas supplied to the anode AN is flowing. In the latter case, the anode off gas discharged from the anode AN can be recycled in the electrochemical hydrogen pump 100.

The first on-off valve 81 is a valve provided in the first flow channel 71. The first on-off valve 81 may have any configuration as long as the first on-off valve 81 can open or close the first flow channel 71. A drive valve that is driven by a nitrogen gas or the like or a solenoid valve may be used as the first on-off valve 81, which is not limited thereto though.

The second on-off valve 82 is a valve provided in the second flow channel 72. The second on-off valve 82 may have any configuration as long as the second on-off valve 82 can open or close the second flow channel 72. The drive valve that is driven by a nitrogen gas or the like or the solenoid valve may be used as the second on-off valve 82, which is not limited thereto though.

Here, while the hydrogen system 200 is in operation, the controller 50 closes the first on-off valve 81 and opens the second on-off valve 82. Then, the controller 50 opens the first on-off valve 81 and closes the second on-off valve 82 when or before the voltage applicator 102 is caused to apply a voltage between the anode catalyst layer 13 and the cathode catalyst layer 12, after the compressing operation of the hydrogen system 200 is stopped.

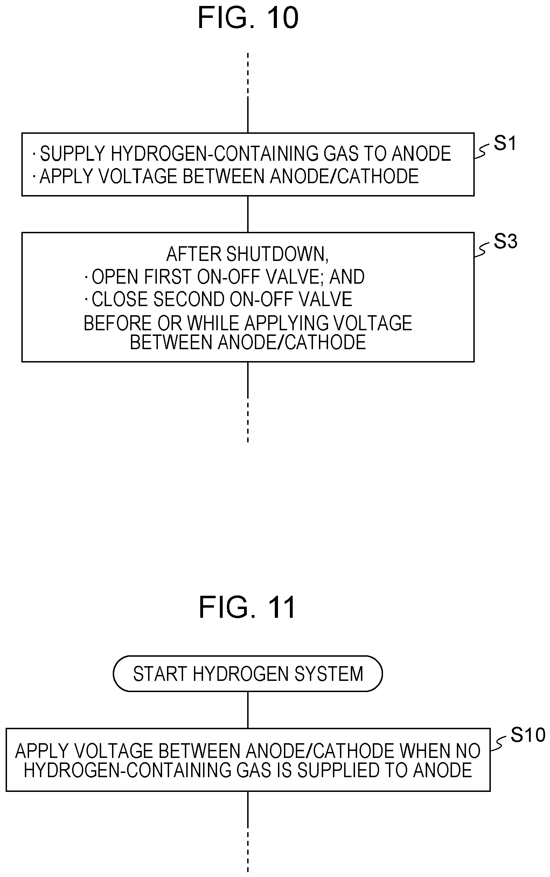

Fig. 10 is a flowchart illustrating an example of the operation of a hydrogen system of the third embodiment. The following operation may be performed, for example, by the arithmetic circuit of the controller 50 reading the control program from the storage circuit of the controller 50. However, it is not necessarily essential that the controller 50 perform the following operation. The operator may perform some of the operation. In the following example, a description will be given of the case where the operation is controlled by the controller 50.

Step S1 of Fig. 10 is similar to step S1 of Fig. 6, and thus a description thereof will be omitted.

In step S3, after the compressing operation of the hydrogen system 200 is stopped, an operation of opening the first on-off valve 81 and closing the second on-off valve 82 is performed before or when the voltage is applied between the anode AN and the cathode CA.

With the above, the hydrogen system 200 and the method of operating the hydrogen system 200 of the present embodiment can mix the cathode off gas present in the cathode CA in the electrochemical hydrogen pump 100 and the anode gas present in the anode AN of the electrochemical hydrogen pump 100 via the first flow channel 71, by opening the first on-off valve 81 after the compressing operation of the hydrogen system 200 is stopped. Then, even if the amount of outside air entering the cathode CA is greater than the amount of outside air entering the anode AN after the hydrogen system 200 is stopped and the gas present in the cathode CA is released, the difference between the hydrogen partial pressure of the anode AN and the hydrogen partial pressure of the cathode CA is reduced.

Then, with the hydrogen system 200 and the method of operating the hydrogen system 200 of the present embodiment, not only the first on-off valve 81 is opened and the second on-off valve 82 is closed, but also the voltage is applied by the voltage applicator 102 between the anode catalyst layer 13 and the cathode catalyst layer 12. Thereby, the gas present in each of the anode AN and the cathode CA circulates in the electrochemical hydrogen pump 100 and the first flow channel 71, thus further reducing the difference between the hydrogen partial pressures of the respective anode AN and cathode CA.

With the above, with the hydrogen system 200 and the method of operating the hydrogen system 200 of the present embodiment, the anode potential of the electrochemical hydrogen pump 100 is less likely to become the negative pressure, thus suppressing the deterioration of the electrolyte membrane 11. In addition, with the hydrogen system 200 of the present embodiment, the wetness-dryness difference between the principal surface area on the side of the anode AN and the principal surface area on the side of the cathode CA in the electrolyte membrane 11 promptly decreases, thus suppressing the mechanical deterioration of the electrolyte membrane 11.

A hydrogen system 200 of this modification example may be similar to any of the first embodiment, the first to seventh examples of the first embodiment, the second embodiment, and the modification example of the second embodiment, except for the characteristics described above.

(Fourth Embodiment)

An apparatus configuration of a hydrogen system 200 and an electrochemical hydrogen pump 100 in a first to third examples and a modification example of the present embodiment, as well as control contents of the controller 50 of the hydrogen system 200 are similar to the hydrogen system 200 of the first embodiment, except for the items to be described below.

(First Example)

The controller 50 causes the voltage applicator 102 to apply a voltage between the anode catalyst layer 13 and the cathode catalyst layer 12 when no hydrogen-containing gas is supplied to the anode AN at startup of the hydrogen system 200.

Fig. 11 is a flowchart illustrating an example of the operation of the hydrogen system of a first example of the fourth embodiment. The following operation may be performed, for example, by the arithmetic circuit of the controller 50 reading the control program from the storage circuit of the controller 50. However, it is not necessarily essential that the controller 50 perform the following operation. The operator may perform some of the operation. In the following example, a description will be given of the case where the operation is controlled by the controller 50.

When the hydrogen system 200 is started, in step S10, the operation of applying a voltage of the voltage applicator 102 between the anode AN and the cathode CA of the electrochemical hydrogen pump 100 is performed while no hydrogen-containing gas is supplied to the anode AN.

Even when no hydrogen-containing gas is supplied to the anode AN at the startup of the hydrogen system 200, the hydrogen partial pressure of the anode AN may be higher than the hydrogen partial pressure of the cathode CA. For example, if the amount of the outside air mixing into the cathode CA from the outside is greater than the amount of outside air mixing into the anode AN after the hydrogen system 200 is stopped, the hydrogen partial pressure of the anode AN may be higher than the hydrogen partial pressure of the cathode CA. Then, due to the elution of the metal ions contained in the anode gas diffusion layer 15, ion-exchange may occur between the metal ions and the protons of the sulfonic acid group in the electrolyte membrane 11. As a result, the electrolyte membrane 11 may deteriorate.

Hence, with the hydrogen system 200 and the method of operating the hydrogen system 200 of this example, when no hydrogen-containing gas is supplied to the anode AN at the startup, by causing the voltage applicator 102 to apply the above-mentioned voltage, the elution of the metal ions is suppressed as compared to the case where such voltage control is not performed. As a result, ion-exchange is inhibited from occurring between the metal ions and the protons of the sulfonic acid group in the electrolyte membrane 11. Consequently, the electrolyte membrane 11 is less likely to deteriorate.

The hydrogen system 200 and the method of operating the hydrogen system 200 of this example may be similar to any of the first embodiment, the first to seventh examples of the first embodiment, the second embodiment, the modification example of the second embodiment, and the third embodiment, except for the characteristics described above.

(Second Example)

At the startup of the hydrogen system 200, if the anode potential $V_a$ of the anode AN is greater than a potential $V_s$ at which the metal ions contained in the anode gas diffusion layer 15 elute when the hydrogen-containing gas is supplied to the anode AN, the controller 50 causes the voltage applicator 102 to apply a voltage between the anode catalyst layer 13 and the cathode catalyst layer 12.

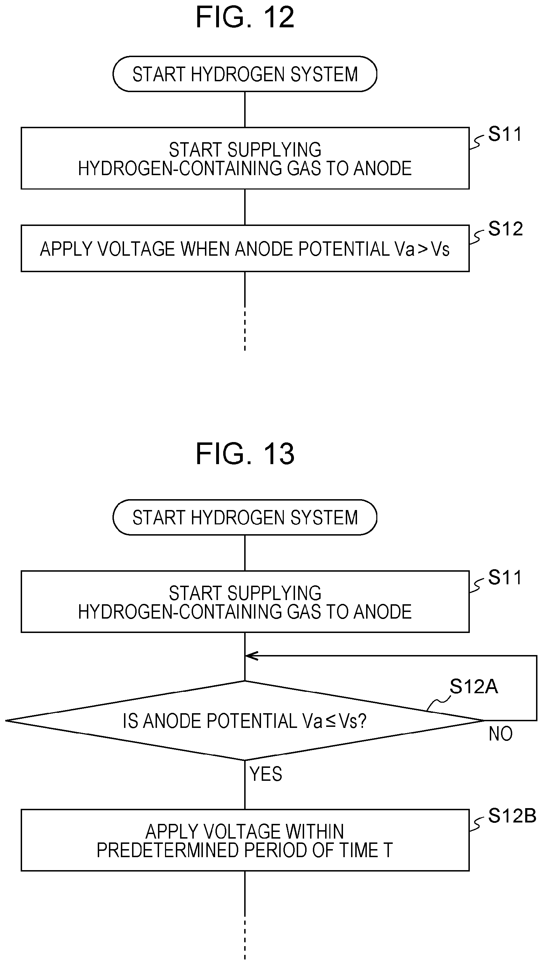

Fig. 12 is a flowchart illustrating an example of the hydrogen system of a second example of the fourth embodiment. The following operation may be performed, for example, by the arithmetic circuit of the controller 50 reading the control program from the storage circuit of the controller 50. However, it is not necessarily essential that the controller 50 perform the following operation. The operator may perform some of the operation. In the following example, a description will be given of the case where the operation is controlled by the controller 50.

When the hydrogen system 200 is started, in step S 11, the supply of the hydrogen-containing gas to the anode AN is started.

Next in step S12, when the potential $V_a$ of the anode AN is greater than the potential $V_s$ at which the metal ions contained in the anode gas diffusion layer 15 elute, a voltage is applied between the anode catalyst layer 13 and the cathode catalyst layer 12.

Here, depending on a type of a metal contained in the anode gas diffusion layer 15 and the operating conditions of the electrochemical cell 100B, the "potential $V_s$" can be set to an appropriate potential at which ions of such a metal might elute. By way of example, if a metal is titanium, the "potential $V_s$" may be set to, but not limited to, approximately - 0.05 V at which titanium ions are less likely to elute, based on the result of the verification experiment described above. In addition, for example, as long as the voltage is at a level where progress of the deterioration of the electrolyte membrane 11 may be effectively suppressed by the elution of the titanium ions, the "potential $V_s$" can also be set to a value that suppresses an elution amount of the titanium ions to such a level.

In this manner, in the method of operating the hydrogen system 200 of this example, if the potential $V_a$ of the anode AN is greater than the potential $V_s$ when the hydrogen-containing gas is supplied to the anode AN, in other words, before the potential $V_a$ of the anode AN becomes lower than or equal to the potential $V_s$, the operation of applying the voltage between the anode catalyst layer 13 and the cathode catalyst layer 12 is performed.

With the above, the hydrogen system 200 and the method of operating the hydrogen system 200 of this example may suppress the deterioration of the electrolyte membrane 11 as compared to the related art. Specifically, if the amount of outside air mixing into the cathode CA from the outside increases after the hydrogen system 200 is stopped, the hydrogen partial pressure of the anode AN may be higher than the hydrogen partial pressure of the cathode CA over time when the hydrogen-containing gas is supplied to the anode AN at the startup. Hence, by causing the voltage applicator 102 to apply the above-mentioned voltage when the potential $V_a$ of the anode AN is greater than the potential $V_s$ at which the metal ions elute, in other words, before the potential $V_a$ of the anode AN becomes lower than or equal to the potential $V_a$ at which the metal ions elute, the potential $V_a$ of the anode AN is inhibited from becoming lower than or equal to the potential $V_s$ at which the metal ions elute, as compared to the case where such voltage control is not performed. Consequently, the electrolyte membrane 11 is less likely to deteriorate.

Further, the hydrogen system 200 and the method of operating the hydrogen system 200 of this example can alleviate a problem of a lack of fuel in the anode AN, by supplying the hydrogen-containing gas to the anode AN at the startup. As such, ion-elution of a cell material (stainless, for example) is appropriately suppressed.

The hydrogen system 200 and the method of operating the hydrogen system 200 of this example may be similar to the first embodiment, the first to seventh examples of the first embodiment, the second embodiment, the modification example of the second embodiment, the third embodiment, and the first example of the fourth embodiment, except for the characteristics described above.

(Third Example)

At the startup of the hydrogen system 200, when the hydrogen-containing gas is supplied to the anode AN, within a predetermined period of time T after the potential Va of the anode AN becomes lower than or equal to the voltage Vs at which the metal ions contained in the anode gas diffusion layer 15 elute, the controller 50 causes the voltage applicator 102 to apply a voltage between the anode catalyst layer 13 and the cathode catalyst layer 12.

Fig. 13 is a flowchart illustrating an example of a hydrogen system of a third example of the fourth embodiment. The following operation may be performed, for example, by the arithmetic circuit of the controller 50 reading the control program from the storage circuit of the controller 50. However, it is not necessarily essential that the controller 50 perform the following operation. The operator may perform some of the operation. In the following example, a description will be given of the case where the operation is controlled by the controller 50.

When the hydrogen system 200 is started, in step S 11, the supply of the hydrogen-containing gas to the anode AN is started.

Next, in step S 12A, it is determined whether the potential Va of the anode AN is lower than or equal to the potential Vs at which the ions of the metal contained in the anode gas diffusion layer 15 elute. Note that the "potential Vs" is similar to the first example, and thus a description thereof will be omitted.

In step S12A, if the potential Va of the anode AN is not lower than or equal to the potential Vs ("No" in step S2A), the condition continues without being changed.

In step S12A, if the potential Va of the anode AN becomes lower than or equal to the potential Vs ("Yes" in step S12A), processing proceeds to a next step. In step S12B, the voltage is applied between the anode catalyst layer 13 and the cathode catalyst layer 12 within the predetermined period of time T.

Here, the "predetermined period of time T" can be set based on the elution amount of the metal ions through ion-exchange with the protons of the sulfonic acid group in the electrolyte membrane 11. For example, a numeric value obtained by dividing an amount of exchanged metal ions that is allowable in the electrolyte membrane 11 by a total number of starts and stops assumed in the hydrogen system 200 (3000 times, for example) corresponds to an allowable elution amount of the metal ions in one start and stop of the hydrogen system 200 (hereinafter referred to as the allowable elution amount of the metal ions). Therefore, by experimentally determining a relationship between an accumulated elution amount of the metal ions since the elution of the metal ions starts when the hydrogen-containing gas is supplied to the anode at the startup, and time elapsed since the potential falls below the potential Vs, the time when the above-mentioned accumulated amount becomes smaller than or equal to the allowable elution amount of the metal ions can be set as the "predetermined period of time T". Note that when the metal ions are titanium ions, the "predetermined period of time T" may be set, but not limited, to approximately 60 seconds, for example.

With the above, the hydrogen system 200 and the method of operating the hydrogen system 200 of this example may suppress the deterioration of the electrolyte membrane 11, as compared to the related art. Specifically, if the amount of outside air mixing into the cathode CA from the outside increases after the hydrogen system 200 is stopped, the hydrogen partial pressure of the anode AN may be higher than the hydrogen partial pressure of the cathode CA over time when the hydrogen-containing gas is supplied to the anode AN at the startup.

Hence, by causing the voltage applicator 102 to apply the abovementioned voltage within the predetermined period of time T after the potential Va of the anode AN becomes lower than or equal to the above-mentioned potential Vs when the hydrogen-containing gas is supplied to the anode AN at the startup, the hydrogen system 200 and the method of operating the hydrogen system 200 of this example can reduce a period of time when the potential Va of the anode AN is lower than or equal to the potential Vs, as compared to the case where such voltage control is not performed. Consequently, the progress of the deterioration of the electrolyte membrane 11 is appropriately suppressed.

Further, the hydrogen system 200 and the method of operating the hydrogen system 200 of this example can alleviate a problem of a lack of fuel in the anode AN, by supplying the hydrogen-containing gas to the anode AN at the startup. As such, ion-elution of the cell material (stainless, for example) is appropriately suppressed.

The hydrogen system 200 and the method of operating the hydrogen system 200 of this example may be similar to any of the first embodiment, the first to seventh examples of the first embodiment, the second embodiment, the modification example of the second embodiment, the third embodiment, and the first and second examples of the fourth embodiment, except for the characteristics described above.

(Modification Example)

The cathode CA may be purged with nitrogen or air before the hydrogen-containing gas is supplied to the anode AN when the hydrogen system 200 is started, or during the shutdown. Then, the cathode CA is filled with nitrogen or air before a voltage is applied between the anode catalyst layer 13 and the cathode catalyst layer 12 by the voltage applicator 102.

The above-described purging operation is performed in order to introduce air or nitrogen into the electrochemical cell 100B, such that no flammable hydrogen remains in the cathode CA, for example, after the hydrogen system 200 is stopped.

In the above-described case, since the cathode CA is filled with nitrogen or air in advance, the hydrogen partial pressure of the anode AN becomes higher than the hydrogen partial pressure of the cathode CA when the supply of the hydrogen-containing gas begins at the startup.

Hence, at the startup, the hydrogen system 200 of this modification example causes the voltage applicator 102 to apply a voltage between the anode catalyst layer 13 and the cathode catalyst layer 12, with the cathode CA filled with nitrogen or air, when the hydrogen-containing gas is supplied. Then, ion-exchange is inhibited from occurring between the metal ions and the protons of the sulfonic acid group in the electrolyte membrane 11, as compared to the case where such voltage control is not performed. Consequently, the electrolyte membrane 11 is less likely to deteriorate.

Note that starting of the application of the above-mentioned voltage is controlled similarly to the first and second example as described above.

After the starting of the application of the above-mentioned voltage, similarly to the first embodiment, the applied voltage may be increased such that the current flowing to the electrochemical cell 100B reaches the intended current during the compressing operation of the hydrogen system 200.

In addition, after the starting of the application of the above-mentioned voltage, similarly to the first embodiment, the operation of maintaining the current flowing to the electrochemical cell 100B at the low current until the water content ratio of the electrolyte membrane 11 increases. Thereafter, when the water content ratio of the electrolyte membrane 11 increases, the applied current may be increased such that the current flowing to the electrochemical cell 100B reaches the above-mentioned intended current.

The hydrogen system 200 of this modification example may be similar to any of the first embodiment, the first to seventh examples of the first embodiment, the second embodiment, the modification example of the second embodiment, the third embodiment, and the first to third examples of the fourth embodiment, except for the characteristics described above.

(Fifth Embodiment)

An apparatus configuration of a hydrogen system 200 and an electrochemical hydrogen pump 100 in a first and second examples of the present embodiment, as well as control contents of the controller 50 of the hydrogen system 200 are similar to the hydrogen system 200 of the first embodiment, except for the items to be described below.

(First Example)

When the humidified hydrogen-containing gas is supplied to the anode AN when the hydrogen system 200 is started, the controller 50 controls the voltage applicator 102 such that the density of the current flowing to the electrochemical cell 100B is maintained at or below a first threshold TH1, the first threshold TH1 smaller than or equal to the intended current density during the compressing operation of the hydrogen system 200, and such that the pressure of the cathode CA is maintained at or below a second threshold TH2 smaller than or equal to the intended pressure during the compressing operation of the hydrogen system 200.

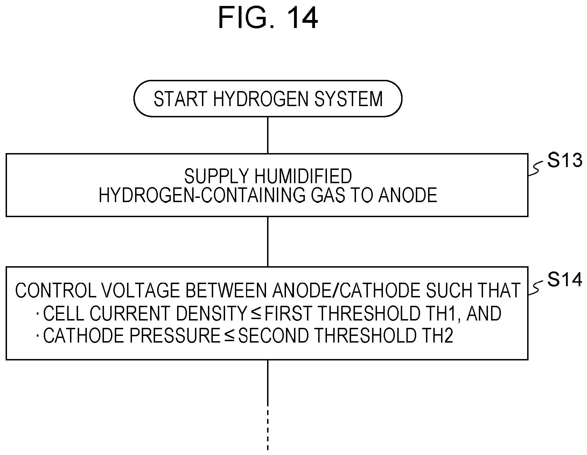

Fig. 14 is a flowchart illustrating an example of an operation of a hydrogen system of a first example of a fifth embodiment. The following operation may be performed, for example, by the arithmetic circuit of the controller 50 reading the control program from the storage circuit of the controller 50. However, it is not necessarily essential that the controller 50 perform the following operation. The operator may perform some of the operation. In the following example, a description will be given of the case where the operation is controlled by the controller 50.

First, when the hydrogen system 200 is started, in step S13, the hydrogen-containing gas humidified by an appropriate humidifier is supplied to the anode AN. This hydrogen-containing gas may be humidified, for example, by a humidifier provided in the anode gas introduction path 29 that is in communication with the anode AN. Examples of the humidifier may include, but not limited to, a bubbler.

Next, in step S14, the voltage applicator 102 is controlled such that the density of the current flowing to the electrochemical cell 100B is maintained at or below the first threshold TH1 smaller than or equal to the intended current density during the compressing operation of the hydrogen system 200, and such that the pressure of the cathode CA is maintained at or below the second threshold TH2 smaller than or equal to the intended pressure during the compressing operation of the hydrogen system 200.

Here, it is necessary to set the first threshold TH1 to an appropriate value that makes it difficult for the electrolyte membrane 11 to reach a high temperature locally, based on the configuration and the conditions of the compressing operation of the hydrogen system 200. The first threshold TH1 may be, but not limited to, approximately 1/10 of the intended current density of the hydrogen system 200, for example.

It is necessary to set the second threshold TH2 to an appropriate value that makes it difficult for the electrolyte membrane 11 to rupture, based on the configuration and the conditions of the compressing operation of the hydrogen system 200. The second threshold TH2 may be, but not limited to, a value smaller than approximately 1 MPa, for example. However, when the second threshold TH2 is set to the above-mentioned value, durability of the electrolyte membrane 11 is ensured, even if the electrolyte membrane 11 is dried, and the hydrogen-containing gas does not fall under the category of "highpressure gas" of the High Pressure Gas Safety Act.

Here, in a shipment inspection, maintenance, or the like of the hydrogen system 200, the electrolyte membrane 11 is often dried when the hydrogen system 200 is started. In this case, if the density of the current flowing to the electrochemical cell 100B exceeds the first threshold TH1 without the water content ratio of the electrolyte membrane 11 being increased to an appropriate value, the electrolyte membrane 11 may become hot and deteriorate in a part where the electrolyte membrane 11 is locally dried. In addition, if the pressure of the cathode CA exceeds the second threshold TH2 without the water content ratio of the electrolyte membrane 11 being increased to an appropriate value, the electrolyte membrane 11 may rupture.

Hence, the hydrogen system 200 of this example can reduce the above-described possibilities by increasing the water content ratio of the electrolyte membrane 11 to an appropriate value with water in the hydrogen-containing gas, while performing the operation of maintaining the density of the current flowing to the electrochemical cell 100B and the pressure of the cathode CA, at or below the first threshold TH1 and at or below the second threshold TH2, respectively. This enables the hydrogen system 200 of this example to perform an aging operation while suppressing the deterioration of the electrolyte membrane 11 during the shipment inspection, maintenance, or the like of the hydrogen system 200.

The hydrogen system 200 of this example may be similar to any of the first embodiment, the first to seventh examples of the first embodiment, the second embodiment, the modification example of the second embodiment, the third embodiment, the first to third examples of the fourth embodiment, and the modification example of the fourth embodiment, except for the characteristics described above.

(Second Example)

When the voltage applied by the voltage applicator 102 to maintain the density of the current flowing to the electrochemical cell 100B at or below the first threshold TH1 and the pressure of the cathode CA at or below the second threshold TH2 decreases, the controller 50 increases the applied voltage of the voltage applicator 102 such that at least one of the density of the current flowing to the electrochemical cell 100B or the pressure of the cathode CA increases.

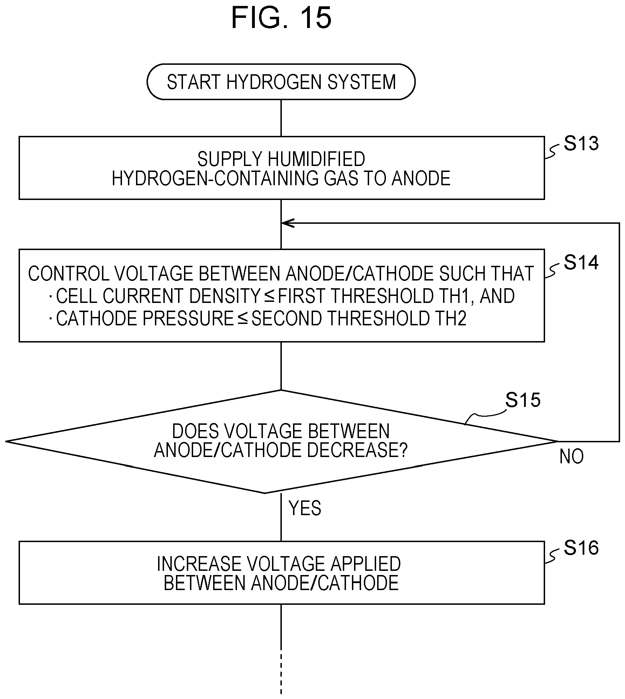

Fig. 15 is a flowchart illustrating an example of an operation of a hydrogen system of a second example of the fifth embodiment. The following operation may be performed, for example, by the arithmetic circuit of the controller 50 reading the control program from the storage circuit of the controller 50. However, it is not necessarily essential that the controller 50 perform the following operation. The operator may perform some of the operation. In the following example, a description will be given of the case where the operation is controlled by the controller 50.

Steps S13 and S14 of Fig. 15 are similar to steps S13 and S14 of Fig. 14, and thus a description thereof will be omitted.

When the operation of step S14 is performed, in step S15, it is determined whether the voltage applied between the anode catalyst layer 13 and the cathode catalyst layer 12 has decreased.

If the applied voltage of step S15 does not decrease ("No" in step S15), the operation of step S14 is continued as it is.

If the applied voltage of step S15 decreases ("Yes" in step S15), the processing proceeds to a next step. In step S16, the voltage applied between the anode catalyst layer 13 and the cathode catalyst layer 12 is increased.

Note that the timing of operation of increasing the applied voltage of step S16 is desirably performed at appropriate time, with the increase in the water content ratio of the electrolyte membrane 11.

For example, if it is considered that $0.3 \ \Omega cm^2$, which is a value converted from membrane resistance of the electrolyte membrane 11, corresponds to a highly humidified state of the electrolyte membrane 11, the applied voltage between the anode catalyst layer 13 and the cathode catalyst layer 12 is approximately 0.3 V, when a current having the current density of $1 \ A/cm^2$ flows to the electrolyte membrane 11. Therefore, the operation of increasing the applied voltage of step S16 may be performed, for example, at the timing when the applied voltage of step S15 reaches (decreases to), for example, approximately 0.3 V.

As described above, an increase in the water content ratio of the electrolyte membrane 11 can be confirmed, for example, with a decrease in the applied voltage of the voltage applicator 102. Hence, in the operation of maintaining the density of the current flowing to the electrochemical cell 100B and the pressure of the cathode CA, at or below the first threshold TH1 and at or below the second threshold TH2, respectively, in step S14 if the applied voltage by the voltage applicator 102 decreases, the hydrogen system 200 of this example increases the applied voltage of the voltage applicator 102 such that at least one of the density of the current flowing to the electrochemical cell 100B or the pressure of the cathode CA increases. This enables the hydrogen system 200 of this example to increase at least one of the density of the current flowing to the electrochemical cell 100B or the pressure of the cathode CA at appropriate time, with the increase in the water content ratio of the electrolyte membrane 11.

The hydrogen system 200 of this example may be similar to any of the first embodiment, the first to seventh examples of the first embodiment, the second embodiment, the modification example of the second embodiment, the third embodiment, the modification example of the fourth embodiment, and the first example of the fifth embodiment, except for the characteristics described above.

The first embodiment, the first to seventh examples of the first embodiment, the second embodiment, the modification example of the second embodiment, the third embodiment, the first to third examples of the fourth embodiment, the modification example of the fourth embodiment, and the first and second examples of the fifth embodiment may be combined with each other as long as they do not exclude each other.

Additionally, from the above description, many modifications of the present disclosure and other embodiments are apparent to those skilled in the art. Therefore, the above description should be interpreted only as an example, and are provided to teach the best mode for carrying out the present disclosure to those skilled in the art. It is possible to substantially make a change to details of a structure and/or functions of the present disclosure without departing from the spirit thereof.

Industrial Applicability

An aspect of the present disclosure can be applied to a hydrogen system that may suppress deterioration of an electrolyte membrane as compared to the related art.

Reference Signs List

| | |
|---|---|
| 11 | electrolyte membrane |
| 12 | cathode catalyst layer |
| 13 | anode catalyst layer |
| 14 | cathode gas diffusion layer |
| 15 | anode gas diffusion layer |
| 15S | porous sheet |
| 16 | cathode separator |
| 17 | anode separator |
| 21 | insulator |
| 22A | anode feeder plate |
| 22C | cathode feeder plate |
| 23A | anode insulating plate |
| 23C | cathode insulating plate |
| 24A | anode end plate |
| 24C | cathode end plate |
| 25 | fastener |
| 26 | cathode gas lead-out path |
| 27 | anode gas introduction manifold |
| 28 | cathode gas lead-out manifold |
| 29 | anode gas introduction path |
| 30 | anode gas lead-out manifold |
| 31 | anode gas lead-out path |
| 33 | anode gas flow channel |
| 34 | cathode gas passage path |
| 35 | first anode gas passage path |
| 36 | second anode gas passage path |

| 40 | sealing member |
|---|---|
| 42 | sealing member |
| 43 | sealing member |
| 50 | controller |
| 60 | flow regulator |
| 71 | first flow channel |
| 72 | second flow channel |
| 81 | first on-off valve |
| 82 | second on-off valve |
| 100 | electrochemical hydrogen pump |
| 100A | hydrogen pump unit |
| 100B | electrochemical cell |
| 102 | voltage applicator |
| 200 | hydrogen system |
| AN | anode |
| CA | cathode |
| T | predetermined period of time |
| TH1 | first threshold |
| TH2 | second threshold |
| Va | potential |
| Vs | potential |

**Claims**

1. A hydrogen system comprising:

   a compressor including at least one cell that includes an electrolyte membrane, an anode catalyst layer provided on one principal surface of the electrolyte membrane, a cathode catalyst layer provided on another principal surface of the electrolyte membrane, an anode gas diffusion layer provided on the anode catalyst layer and including a porous sheet containing a metal, and a cathode gas diffusion layer provided on the cathode catalyst layer, and a voltage applicator that apples a voltage between the anode catalyst layer and the cathode catalyst layer, wherein the compressor that generates compressed hydrogen by causing the voltage applicator to apply the voltage to move hydrogen in hydrogen-containing gas supplied to an anode to the cathode via the electrolyte membrane; and
   a controller that causes the voltage applicator to apply the voltage after shutdown or at startup.

2. The hydrogen system according to claim 1, wherein the controller causes the voltage applicator to apply the voltage after supply of the hydrogen-containing gas to the anode is stopped.

3. The hydrogen system according to claim 1, wherein the controller causes the voltage applicator to apply the voltage after a cathode off gas is discharged from the cathode to a discharge destination different from a hydrogen demanding unit.

4. The hydrogen system according to any one of claims 1 to 3, wherein the metal includes titanium.

5. The hydrogen system according to any one of claims 1 to 4, wherein after the shutdown, the controller causes the voltage applicator to apply the voltage smaller than a maximum voltage to be applied during operation.

6. The hydrogen system according to any one of claims 1 to 4, wherein after the shutdown, the controller causes the voltage applicator to apply the voltage smaller than a voltage applied when a cathode pressure reaches a supply pressure of compressed hydrogen to a hydrogen demanding unit.

7. The hydrogen system according to any one of claims 1 to 6, further comprising:

   a flow regulator that regulates a flow rate of the hydrogen-containing gas supplied to the anode, wherein
   when the controller causes the voltage applicator to apply the voltage after the shutdown, the controller controls the flow regulator such that the hydrogen-containing gas is supplied to the anode at a flow rate smaller than a flow rate of the hydrogen-containing gas supplied to the anode during operation.

8. The hydrogen system according to any one of claims 1 to 6, comprising:

a flow regulator that regulates a flow rate of the hydrogen-containing gas supplied to the anode, wherein when the controller causes the voltage applicator to apply the voltage after the shutdown, the controller controls the flow regulator and does not supply the hydrogen-containing gas to the anode.

9. The hydrogen system according to any one of claims 1 to 8, wherein after the shutdown, the controller causes the voltage applicator to apply the voltage necessary for moving, from the anode to the cathode, hydrogen of an amount which corresponds to an amount of hydrogen returning from the cathode to the anode via the electrolyte membrane.

10. The hydrogen system according to any one of claims 1 to 9, further comprising

a first flow channel for supplying to the anode a cathode off gas discharged from the cathode of the compressor, a first on-off valve provided in the first flow channel, a second flow channel through which an anode off gas discharged from the anode of the compressor flows, and a second on-off valve provided in the second flow channel, wherein
before or while the controller causes the voltage applicator to apply a voltage after the shutdown, the controller opens the first on-off valve and closes the second on-off valve.

11. The hydrogen system according to any one of claims 1 to 10, wherein after the shutdown, the controller causes the voltage applicator to apply the voltage smaller than or equal to 1/10 of a maximum voltage to be applied during operation.

12. The hydrogen system according to any one of claims 1 to 10, wherein after the shutdown, the controller causes the voltage applicator to apply the voltage lower than or equal to 0.1 V per the one cell.

13. The hydrogen system according to any one of claims 1 to 12, wherein a voltage applied by the voltage applicator after the shutdown is a voltage necessary for increasing to 0 V or higher an anode potential of the compressor that is assumed when no voltage is applied by the voltage applicator after the shutdown.

14. The hydrogen system according to claim 1, wherein the controller causes the voltage applicator to apply the voltage when no hydrogen-containing gas is supplied to the anode at the startup.

15. The hydrogen system according to claim 1, wherein when the hydrogen-containing gas is supplied to the anode at the startup, the controller causes the voltage applicator to apply the voltage when a potential of the anode is greater than a predetermined potential at which metal ions contained in the anode gas diffusion layer elute, or the controller causes the voltage applicator to apply the voltage within a predetermined period of time after the potential of the anode falls below the predetermined potential.

16. The hydrogen system according to any one of claims 1, 14 to 15, wherein the metal includes titanium.

17. The hydrogen system according to any one of claims 1, 14 to 16, wherein the cathode is filled with nitrogen or air before the voltage is applied by the voltage applicator.

18. The hydrogen system according to claim 15, wherein

when a humidified hydrogen-containing gas is supplied to the anode at the startup,
the controller controls the voltage applicator such that a density of current flowing through the cell is maintained at or below a first threshold which is smaller than an intended current density during a compressing operation, and such that a pressure of the cathode is maintained at or below a second threshold which is smaller than an intended pressure during the compressing operation.

19. The hydrogen system according to claim 18, wherein when a voltage applied by the voltage applicator to maintain the density of the current flowing through the cell at or below the first threshold and the pressure of the cathode at or below the second threshold decreases, the controller increases the voltage applied by the voltage applicator such that at least one of the density of the current flowing through the cell or the pressure of the cathode increases.

**20.** A method of operating a hydrogen system comprising:

generating compressed hydrogen by applying a voltage between an anode and a cathode to move hydrogen in hydrogen-containing gas supplied to the anode to the cathode, which includes an anode gas diffusion layer including a porous sheet containing a metal, and the cathode, the anode and the cathode being provided with an electrolyte membrane interposed therebetween; and

applying a voltage between the anode and the cathode after shutdown or at startup.

**21.** The method of operating a hydrogen system according to claim 20, wherein the voltage is applied between the anode and the cathode after supply of the hydrogen-containing gas to the anode is stopped.

**22.** The method of operating a hydrogen system according to claim 20, wherein the voltage is applied between the anode and the cathode after a cathode off gas is discharged from the cathode to a discharge destination which is different from a hydrogen demanding unit.

**23.** The method of operating a hydrogen system according to claim 20, wherein the voltage is applied between the anode and the cathode when no hydrogen-containing gas is supplied to the anode at the startup.

**24.** The method of operating a hydrogen system according to claim 20, wherein when the hydrogen-containing gas is supplied to the anode at the startup, the voltage is applied between the anode and the cathode when a potential of the anode is greater than a predetermined potential at which metal ions contained in the anode gas diffusion layer elute, or the voltage is applied between the anode and the cathode within a predetermined period of time after the potential of the anode falls below the predetermined potential.

## FIG. 1

# FIG. 2

200

HYDROGEN-CONTAINING GAS

FIG. 3A

100

FIG. 3B

## FIG. 4A

100

## FIG. 4B

# FIG. 5

# FIG. 6

# FIG. 7A

·SUPPLY HYDROGEN-CONTAINING GAS TO ANODE
·APPLY VOLTAGE BETWEEN ANODE/CATHODE — S1

AFTER SHUTDOWN, APPLY VOLTAGE BETWEEN
ANODE/CATHODE AFTER STOPPING SUPPLY
OF HYDROGEN-CONTAINING GAS TO ANODE — S2A

# FIG. 7B

·SUPPLY HYDROGEN-CONTAINING GAS TO ANODE
·APPLY VOLTAGE BETWEEN ANODE/CATHODE — S1

AFTER SHUTDOWN, APPLY VOLTAGE BETWEEN ANODE/CATHODE
AFTER DISCHARGING CATHODE GAS FROM CATHODE TO DISCHARGE
DESTINATION DIFFERENT FROM HYDROGEN DEMANDING UNIT — S2B

# FIG. 8

HYDROGEN-CONTAINING GAS

# FIG. 9

# FIG. 10

```
┌──────────────────────────────────────────────────┐
│ · SUPPLY HYDROGEN-CONTAINING GAS TO ANODE         │  ⌇ S1
│ · APPLY VOLTAGE BETWEEN ANODE/CATHODE             │
└──────────────────────────────────────────────────┘

┌──────────────────────────────────────────────────┐
│                  AFTER SHUTDOWN,                   │  ⌇ S3
│          · OPEN FIRST ON-OFF VALVE; AND            │
│          · CLOSE SECOND ON-OFF VALVE               │
│          BEFORE OR WHILE APPLYING VOLTAGE          │
│                BETWEEN ANODE/CATHODE               │
└──────────────────────────────────────────────────┘
```

# FIG. 11

```
            ( START HYDROGEN SYSTEM )

┌──────────────────────────────────────────────────┐
│ APPLY VOLTAGE BETWEEN ANODE/CATHODE WHEN NO        │  ⌇ S10
│ HYDROGEN-CONTAINING GAS IS SUPPLIED TO ANODE       │
└──────────────────────────────────────────────────┘
```

# FIG. 12

START HYDROGEN SYSTEM

START SUPPLYING
HYDROGEN-CONTAINING GAS TO ANODE — S11

APPLY VOLTAGE WHEN ANODE POTENTIAL Va > Vs — S12

# FIG. 13

START HYDROGEN SYSTEM

START SUPPLYING
HYDROGEN-CONTAINING GAS TO ANODE — S11

IS ANODE POTENTIAL Va ≤ Vs? — S12A

NO

YES

APPLY VOLTAGE WITHIN
PREDETERMINED PERIOD OF TIME T — S12B

# FIG. 14

START HYDROGEN SYSTEM

SUPPLY HUMIDIFIED
HYDROGEN-CONTAINING GAS TO ANODE — S13

CONTROL VOLTAGE BETWEEN ANODE/CATHODE SUCH THAT — S14
· CELL CURRENT DENSITY ≤ FIRST THRESHOLD TH1, AND
· CATHODE PRESSURE ≤ SECOND THRESHOLD TH2

# FIG. 15

```
         ( START HYDROGEN SYSTEM )
                    │
  ┌─────────────────────────────────────┐  ⟋ S13
  │          SUPPLY HUMIDIFIED          │
  │   HYDROGEN-CONTAINING GAS TO ANODE  │
  └─────────────────────────────────────┘
                    │
                    ▼ ◄──────────────────┐
  ┌─────────────────────────────────────┐  ⟋ S14
  │ CONTROL VOLTAGE BETWEEN ANODE/CATHODE SUCH THAT │
  │ ·CELL CURRENT DENSITY ≤ FIRST THRESHOLD TH1, AND│
  │ ·CATHODE PRESSURE ≤ SECOND THRESHOLD TH2        │
  └─────────────────────────────────────┘
                    │                        S15
                    ▼                   ⟋
             ◇─────────────────────◇
            ╱  DOES VOLTAGE BETWEEN  ╲   NO
           ◇  ANODE/CATHODE DECREASE? ◇──────┘
            ╲                        ╱
             ◇─────────────────────◇
                    │ YES
                    ▼
  ┌─────────────────────────────────────┐  ⟋ S16
  │      INCREASE VOLTAGE APPLIED        │
  │       BETWEEN ANODE/CATHODE          │
  └─────────────────────────────────────┘
                    ┆
```

**INTERNATIONAL SEARCH REPORT**

| International application No. |
| --- |
| PCT/JP2021/021044 |

A. CLASSIFICATION OF SUBJECT MATTER
Int.Cl. C25B1/02(2006.01)i, C01B3/00(2006.01)i, C25B15/02(2021.01)i
FI: C25B1/02, C25B15/02, C01B3/00Z

According to International Patent Classification (IPC) or to both national classification and IPC

B. FIELDS SEARCHED

Minimum documentation searched (classification system followed by classification symbols)
Int.Cl. C25B1/02, C01B3/00, C25B15/02

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2019-206749 A (PANASONIC INTELLECTUAL PROPERTY MANAGEMENT CO., LTD.) 05 December 2019 (2019-12-05), claims, paragraphs [0016]-[0042], [0225]-[0231] | 1, 4, 14-17, 20, 23-24 |
| Y | paragraphs [0016]-[0042] | 4, 16 |
| A | | 3, 18-19, 22 |
| | | |
| X | WO 2008/019300 A2 (H2 PUMP LLC) 14 February 2008 (2008-02-14), claims, page 2, lines 13-17, page 3, lines 2-9 | 1-2, 5-15, 17, 20-21, 23-24 |
| Y | | 4, 16 |
| A | | 3, 18-19, 22 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 04 August 2021 | 17 August 2021 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

| International application No. |
| --- |
| PCT/JP2021/021044 |

| | | |
| --- | --- | --- |
| JP 2019-206749 A | 05 December 2019 | US 2019/0363386 A1 claims, paragraphs [0028]-[0054], [0238]-[0244] EP 3573157 A1 CN 110528012 A |
| WO 2008/019300 A2 | 14 February 2008 | (Family: none) |

Form PCT/ISA/210 (patent family annex) (January 2015)

**EP 4 183 895 A1**

**REFERENCES CITED IN THE DESCRIPTION**

**Patent documents cited in the description**

- JP 5095670 B
- JP 4165655 B
- JP 2019206749 A